# EUROPÄISCHE PATENTSCHRIFT

(11) **EP 1 884 749 B1**
(45) Veröffentlichungstag und Bekanntmachung des Hinweises auf die Patenterteilung: **02.05.2012**
(21) Anmeldenummer: 07112634.6
(22) Anmeldetag: 17.07.2007
(51) Int. Cl.: G01D 5/20

(54) **Induktive Positions- oder Winkelmesseinrichtung**
Inductive position or angle measurement device
Dispositif de mesure de position ou de mesure angulaire inductif

(30) Priorität: 31.07.2006 EP 06015898; 22.11.2006 EP 06024226
(43) Veröffentlichungstag der Anmeldung: 06.02.2008
(73) Patentinhaber: ZF Friedrichshafen AG, 88038 Friedrichshafen (DE)
(72) Erfinder: Habenschaden, Josef, 92702, Kohlberg (DE); Eissner, Markus, 92676, Eschenbach (DE); Schreiber, Michael, 71171, Greding (DE)

(56) Entgegenhaltungen:
- GB-A- 2 272 295
- US-A- 5 003 260
- US-A- 5 617 023

## Beschreibung

Die Erfindung betrifft eine induktive Positions- oder Winkelmesseinrichtung mit zwei, drei oder vier digitalen Oszillatoren, die jeweils entweder eine Messspule oder eine Referenzspule enthalten Die Mess- oder Referenzspulen bilden eine Spulenanordnung, in deren Nähe ein bewegliches Messelement eine bestimmte Position oder eine bestimmte Winkelstellung einnimmt. Das Messelement kann beispielsweise zu einem Getriebesensor gehören, der in einem Kraftfahrzeuggetriebe eingebaut ist In diesem Anwendungsfall ist das Messelement mechanisch verbunden mit einem Gangwahl-Stellglied innerhalb des Getriebes. Insbesondere kann das Gangwahl-Stellglied eine Schaltschwinge eines Doppelkupplungsgetriebes sein. Das Messelement kann an eine geradlinige Bewegung eines Stellglieds oder an die kreisbogenförmige Bewegung z.B der Schaltschwinge angepasst sein Im zweiten Fall kann das Messelement, das über eine dann kreisbogenförmige Spulenanordnung geführt wird, entsprechend der Bewegungsrichtung in sich gekrümmt sein Die induktive Positionsmesseinrichtung ermöglicht eine Rückmeldung darüber, welcher Gang in einem Automatikgetriebe gerade eingelegt wird Darüber hinaus erfasst sie zeitnah und positionsgenau den getriebeinternen Ablauf des Schaltvorgangs, beispielsweise die Bewegung der genannten Schaltschwinge zwischen den Positionen "Eingriff in einen Synchronring A", "Mitte" und "Eingriff in einen Synchronring B" in dem Doppelkupplungsgetriebe

Die induktive Messeinrichtung arbeitet vorzugsweise nach dem Prinzip des Wirbelstromsensors Es ist im Rahmen der Erfindung auch möglich, die Induktivitätsänderungen in der Messeinrichtung durch Messelemente aus weichmagnetischen Werkstoffen wie z.B Ferrite zu erzielen Im Folgenden wird jedoch nicht eine Verstärkung des Magnetfelds, sondern eine Abschwächung des Magnetfelds als Beispiel betrachtet Das Magnetfeld der Messspule erzeugt in einem elektrisch leitfähigen Messelement Wirbelströme, die auf die Spule zurückwirken Unter anderem wird die Induktivität der Messspule von der räumlichen Lage des Messelementes relativ zur Spule beeinflusst Diese veränderliche Induktivität bestimmt zusammen mit der Kapazität eines Kondensators die Eigenfrequenz eines entsprechenden Oszillators, der beispielsweise als Colpitts-Oszillator ausgebildet sein kann Die Auswertung der Eigenfrequenz erlaubt die Positionsmessung (i) mit guter Ortsauflösung innerhalb eines Messbereichs von beispielsweise 24 mm und (ii) mit guter Zeitauflösung von beispielsweise 1 ms.

Die Schrift DE 42 37 879 A1 offenbart eine Auswerteschaltung für einen ähnlich ausgebildeten Induktivsensor. Zwei Messspulen sind als Differentialsensor geschaltet, d h die Induktivitäten der beiden Spulen verändern sich gegensinnig in Abhängigkeit von der erfassten Stellung eines Kerns Jede Messspule wird zusammen mit zwei Kondensatoren als Oszillator betrieben, der durch einen Invertierverstärker zu einem digitalen Colpitts-Oszillator vervollständigt ist. Das Ausgangssignal dieses Oszillators kann in einer digitalen Auswerteschaltung unmittelbar weiter verarbeitet werden Die Schwingungsdauer des Oszillators wird dadurch bestimmt, dass durch das Oszillatorsignal ein Zähler freigegeben und nach Ablauf von beispielsweise zwei Schwingungsperioden gestoppt wird. Der Zählerstand des Zählers erhöht sich synchron mit einer Taktfrequenz, die von einem gesonderten Oszillator geliefert wird und die wesentlich höher ist als die Frequenz des Sensoroszillators Anschließend werden die Zählerstände der zwei gegensinnigen Sensoroszillatoren subtrahiert und als digitales Messergebnis ausgegeben.

Aus der Schrift DE 40 38 515 A1 ist eine weitere Einrichtung zur Längen- oder Winkelmessung bekannt Sie wird beispielsweise in Kraftfahrzeugen dazu verwendet, das Karosserieniveau zu regulieren oder die Winkelposition der Kurbelwelle zu messen Als Probleme der Messeinrichtung werden ein großer Temperaturbereich sowie sonstige negative Einflüsse von Umgebungsbedingungen namhaft gemacht Eine Abtastspule ist jeweils Teil eines LC-Schwingkreises, der seinerseits durch einen geregelten Abtastoszillator betrieben wird Oszillatorschaltung und Schwingkreis erzeugen als Analogschaltung eine Wechselspannung, deren Frequenz durch den Schwingkreis bestimmt, aber während der Messung nicht wesentlich verändert wird. Vielmehr werden mehrere Abtastoszillatoren nebeneinander verwendet, deren Schwingkreise in ihrer Amplitude durch Dämpfung bzw. Nichtdämpfung von mehreren parallelen Kodespuren her beeinflusst werden. Zur Eliminierung eines störenden Übersprechens zwischen den Abtastspulen werden die Schwingkreise auf etwas unterschiedliche Resonanzfrequenzen abgestimmt Zur Bedämpfung jeweils einer Abtastspule wird jeweils eine in der Längeneinheit geeichte, abwechselnd aus metallisch leitenden und nicht leitenden Flächen bestehende, binäre Spur verwendet Um in einem großen Temperaturbereich sichere Messergebnisse zu erhalten, ist ein zusätzlicher Referenzoszillator vorgesehen, der mit den Abtastoszillatoren im wesentlichen baugleich und räumlich so angeordnet ist, dass er den gleichen Umgebungsbedingungen ausgesetzt ist wie die Abtastoszillatoren Der Referenzoszillator bleibt immer unbedämpft; außerdem wird er analog geregelt auf einen Betrieb mit konstanter Amplitude. Seine die Umwelteinflüsse reflektierende Regelgröße wird zur Amplitudensteuerung der eigentlichen Abtastoszillatoren und damit als Vergleichswert für die Spannungen der Abtastoszillatoren herangezogen.

Beim Einsatz induktiver Messeinrichtungen dieser oder ähnlicher Art in Getrieben treten fünf Probleme verstärkt und sich gegenseitig verstärkend auf, die über die bekannte Temperaturabhängigkeit hinausgehen Zum einen ist innerhalb des Getriebes der Bauraum für eine Leiterplatte, auf der die Oszillatoren und die Auswerteschaltung zweckmäßigerweise aufgebaut sind, grundsätzlich beengt und auch aufgrund des induktiven Messprinzips begrenzt. Zweitens unterliegen die planar auf der Leiterplatte aufgebrachten Spulen und die übrigen Bauteile der Oszillator- und Auswerteschaltungen nicht nur der üblichen Temperaturdrift, sondern müssen in einem Temperaturbereich, der in dem Getriebe Betriebstemperaturen zwischen -40°C und +150°C annimmt, zuverlässig mit dem beweglichen Messelement zusammenarbeiten Zusätzlich zu den hierdurch verursachten Wärmedehnungen beeinflussen drittens mechanische Toleranzen im Getriebe die funktionswichtige Abstandshöhe zwischen der planaren Messspule einerseits und dem plattenförmigen, in möglichst konstantem Abstand über die Messspule zu führenden Messelement andererseits Da die induktive Sensorik zudem eine Mehrzahl von Ubergangspositionen längs des Bewegungspfades des Gangschalt-Stellglieds oder eine Mehrzahl von Winkelstellungen auflösen soll, ist viertens eine lineare Kennlinie des Sensors in einem relativ großen Messbereich erforderlich. Schließlich soll fünftens ein Metallschlamm, der sich im Ölsumpf eines Getriebes durch Abrieb ansammelt, die Messung nicht beeinflussen (wie es zum Beispiel bei einem Hall-Sensor der Fall ist, dessen Permanentmagnet mit zunehmender Betriebsdauer von Eisenabrieb umlagert wird).

Die Aufgabe der Erfindung besteht deshalb darin, eine platzsparende Positions- oder Winkelmesseinrichtung anzugeben, die in einem großen Temperaturbereich verwendbar ist und die gegen mechanische Toleranzen sowie gegen Abrieb des Messobjekts unempfindlich ist und die einen möglichst hohen Positions- oder Winkelmessbereich aufweist, in dem die Kennlinie linear ist.

Diese Aufgabe wird durch eine induktive Positions- oder Winkelmesseinrichtung mit den Merkmalen des Anspruchs 1 gelöst. Zweckmäßige Weiterbildungen gehen aus den Unteransprüchen hervor Die Messeinrichtung nach dem Anspruch 1 kombiniert ihre Merkmale wie folgt zu einer zweckmäßigen Gesamtlösung:

Wie in dem Stand der Technik gemäß den Schriften '879 und '515 werden als Oszillatoren LC-Schwingkreise verwendet Anders als in der Schrift '879 teilen sich die Oszillatoren nicht die gleichen Kondensatoren im Zeitmultiplex, sondern arbeiten parallel, jeder für sich und ohne Umschaltung der Oszillatorspulen. Anders als in der Schrift '515 genügt für die absolute Positionsmessung ein einziger Messoszillator, oder alternativ zwei Messoszillatoren in Differenzschaltung; dies hat den Vorteil, dass ein in sich nicht strukturiertes, relativ ausgedehntes und robustes, nur mit einer zweckmäßigen Außenkontur versehenes Messelement verwendbar ist, anstatt mehrere parallele, kleinteilig geeichte, binäre Kodespuren mittels einer Reihe von Oszillatoren abzutasten.

Die Oszillatoren der Erfindung arbeiten digital in dem Sinne, dass sie ein pulsförmiges, amplitudenbegrenztes Ausgangssignal mit einer positionsabhängigen Pulsfrequenz liefern. Dies hat den Vorteil, dass das Ausgangssignal ohne Analog/Digital-Wandler oder Demodulatoren unmittelbar digital weiterverarbeitet werden kann Anders als in der Schrift '515 wird keine analoge Schwingungsamplitude als Maß für die Bedämpfung der Spule herangezogen Anders als in der Schrift '879 liegen die Pulsfrequenzen eines Oszillators im Bereich von 25 bis 60 MHz und damit so hoch, dass sie in der Auswerteschaltung direkt (d h. ohne einen zusätzlichen Taktoszillator) gezählt werden können.

Neben einem Oszillator mit einer Messspule kann ein weiterer Oszillator nach dem Anspruch 1 auch eine Referenzspule enthalten, wodurch ein Referenzoszillator entsteht Die Pulsfrequenz eines solchen Referenzoszillators hängt - anders als bei den Messspulen und bei dem Messoszillator in der Schrift '879 - nicht vom Grad der Überdeckung der Spule durch das bewegliche Messelement ab, sondern erfasst getrennt von der Positionsmessung Störeinflüsse, die gleichartig auf die Messspule einwirken Je nach der zu kompensierenden Störgröße bleibt die Referenzspule im gesamten Messbereich des beweglichen Messelements entweder vollständig bedeckt/bedämpft (Hochfrequenzoszillator) oder vollständig unbedeckt/unbedämpft (Niedrigfrequenzoszillator).

So lässt sich etwa die Temperaturabhängigkeit der Kennlinie "Pulsfrequenz als Funktion des Messwegs" durch eine einfache Rechenoperation kompensieren Zu guten Ergebnissen führt eine Subtraktion der Pulsfrequenz des Mess-Oszillators und der Referenz-Pulsfrequenz des Niedrigfrequenzoszillators. Im Unterschied zu der Schrift '515 ist kein Regelkreis zur Konstanthaltung des Referenzoszillators erforderlich und es muss die im Referenzoszillator gewonnene Regelgröße nicht in den Messoszillator eingespeist werden.

Ein zweiter Typ von Referenzoszillator, der in keiner der Schriften '879 und '515 vorgesehen ist, dient zum Ausgleich von mechanischen Toleranzen, welche die Abstandshöhe zwischen der Spulenanordnung und dem plattenförmigen Messelement empfindlich beeinflussen. Vorzugsweise sind alle Spulen, jedenfalls die vom Messelement überdeckten Spulen, planar ausgebildet, d.h. als Flachspulen in die Leiterplatte geätzt. Statische Toleranzen, die vom Einbau der Messeinrichtung in das Getriebe herrühren, führen zu Abstandshöhen, die von Getriebe zu Getriebe zwischen 0,5 mm und 3 mm schwanken können Hinzu kommen Toleranzen der Abstandshöhe, die während des Betriebs der Messeinrichtung auftreten Sie rühren von Wärmedehnungen im Getriebe her und betragen weitere +/- 0,5 mm. Auch dynamische Störungen in Form von Vibrationen können den Abstand des Messelements von der Spulenanordnung verändern Diese Störeinflüsse werden durch eine Referenzspule ausgeschaltet, die von dem beweglichen Messelement an jeder Stelle des Messbereichs vollständig überdeckt wird Die hierdurch bewirkte maximale Bedämpfung durch die Wirbelströme führt zu einer minimalen Induktivität der Referenzspule und zu einer maximalen Pulsfrequenz des zugehörigen Referenzoszillators Zur Kompensation des Störeinflusses würde auch in diesem Fall eine einfache Subtraktion der Referenz-Pulsfrequenz von der Pulsfrequenz des Messoszillators genügen. Noch günstiger ist allerdings die Möglichkeit, die Pulsfrequenzen der beiden Referenzspulen voneinander zu subtrahieren Diese Differenz liefert einen unter den herrschenden Messbedingungen möglichen Maximalwert, der als Normierwert zur Anpassung einer geeigneten Messzeit herangezogen wird. Während der adaptiv bestimmten Messzeit werden sowohl die Pulsfrequenz des Messoszillators als auch die Pulsfrequenzen der beiden Referenzoszillatoren gezählt. Die hierfür geeignete Mess- und Referenzspulenanordnung für drei Oszillatoren wird besonders bevorzugt.

Die digitalen Signale aller Oszillatoren werden einer integrierten Auswerteschaltung zugeleitet, die als Gate Array (GA) ausgebildet ist oder die vom Anwender programmierbar sein kann (FPGA) oder die anwendungsspezifisch fest verschaltet sein kann (ASIC) Jede der angelieferten Pulsfrequenzen wird in einer Eingangsstufe in einem asynchronen Frequenzzähler gezählt Start- und Stoppsignale für die Zähler werden von einer Steuereinheit erzeugt Die Messzeit, also die Differenz zwischen dem Start- und dem Stoppsignal der asynchronen Zähler, wird der Steuereinheit durch die erwähnten Referenzmessungen vorgegeben.

Die Zählerstände der asynchronen Zähler werden, falls erforderlich, in Registern zwischengespeichert und dann verrechnet, insbesondere paarweise subtrahiert. Für jedes Frequenzpaar, dessen Signaldifferenz in der realisierten Ausführungsform der Erfindung von Interesse ist, ist in der Auswerteschaltung ein Subtrahierer vorgesehen.

Der synchrone Teil der Auswerteschaltung wird mit Hilfe einer Systemfrequenz intern getaktet Anders als in der Schrift '879 ist kein gesonderter Taktgeber vorgesehen, sondern die Systemfrequenz wird aus der Pulsfrequenz des Oszillators mit der unbedeckten Referenzspule abgeleitet Durch die Nutzung einer Oszillatorfrequenz als Systemtakt entfällt eine Temperaturkompensation für diejenigen Temperaturdriften, die innerhalb der Oszillatoren gleichartig auftreten. Ferner wird ein gesonderter Taktgeber als Bauteil für die Auswerteschaltung eingespart, wodurch bei der Verwendung eines ASIC-Chips die benötige Chipfläche reduziert wird.

Die Aufgabe der Erfindung wird auf besonders günstige Weise gelöst durch eine mit genau drei Oszillatoren ausgestattete induktive Positions- oder Winkelmesseinrichtung. Der erste Oszillator enthält als Messoszillator die eingangs genannte Messspule, die partiell, entsprechend dem Messweg, von dem beweglichen Messelement überdeckt wird Der zweite Oszillator enthält als Niedrigfrequenzoszillator die unbedeckte Referenzspule, während der dritte Oszillator als Hochfrequenzoszillator die vollständig überdeckte Referenzspule nutzt Diese dreifache Spulenanordnung hat gegenüber einer Zweispulenanordnung den Vorteil, dass sie sämtliche Referenzwerte detektieren kann, die zur Kompensation eines Positionsmesswertes auch unter ungünstigen Betriebsbedingungen erforderlich sind Gleichzeitig hat die dreifache Spulenanordnung im Vergleich zu einer Vier-Spulen-Anordnung den Vorteil, dass der Platzbedarf auf der Messplatine geringer ist. Der mit einer vierten Spule (zweite Messspule) erzielbare Vorteil einer Linearisierung der Kennlinie kann auch durch eine einfachere Maßnahme erreicht werden, nämlich durch eine trapezförmige Aufweitung im Endbereich der rechteckigen Grundform der planaren Messspule Die Spulen im Überdeckungsbereich des Messelements sind Planarspulen; die unbedeckte, etwas abseits liegende Referenzspule kann auch als diskretes dreidimensionales Bauelement in SMD-Bauweise aufgebaut sein.

Ein bevorzugter Aufbau eines digitalen Oszillators umfasst neben der Mess- oder Referenzspule zwei Kondensatoren in Colpitts-Schaltung, wobei ein rückgekoppelter Inverter mit Lastwiderstand die analoge LC-Schwingung in einen digitalen Pulszug umsetzt. Die Weiterverarbeitung erfolgt durch Zählung und Subtraktion der Pulsfrequenzen, wobei die Systemfrequenz dieser digitalen Auswerteschaltung aus der Pulsfrequenz des Niedrigfrequenzoszillators abgeleitet wird.

Der Vorteil der Doppelnutzung eines Oszillatorsignals als Messsignal und als Systemfrequenz der Auswerteschaltung kann auch in einer Messeiririchtung genutzt werden, die in einer relativ ungestörten Umgebung mit zwei Messoszillatoren auskommt Der Betrieb der Auswerteschaltung wird hier mit einer Systemfrequenz getaktet, die aus der Pulsfrequenz eines der Messoszillatoren abgeleitet ist Es stört die Schrittfolge in der Auswerteschaltung nicht, wenn die gemessene Frequenz -und damit auch die steuernde Systemfrequenz- den Veränderungen im Rahmen des Messbereichs unterworfen ist.

Die zwei Messspulen tauschen während des Messvorgangs ihre partielle Überdeckung aus Die Differenz ihrer Messsignale verdoppelt die Steilheit der Kennlinie, was in bekannter Weise für die Auflösung oder für den Messbereich oder für die Messdynamik genutzt werden kann.

Ausführungsbeispiele der Erfindung werden anhand von Figuren 1 bis 17c erläutert. Dabei zeigt:
- Figur 1a und Figur 1b :: eine weitere Zweispulenanordnung mit Mess- oder Bedämpfungselement als Teil der Positionsmessvorrichtung;
- Figur 1c: ein Kennlinienfeld des Ausgangssignals der Sensoren 1 und 2 gemäß Figur 1b als Funktion von deren Überdeckung durch das Bedämpfungselement mit einer Verkippung des Bedämpfungselementes als Parameter;
- Figur 2: eine Vierspulenanordnung mit Messelement als Teil der Positionsmessvorrichtung;
- Figur 3: eine Dreispulenanordnung als Teil der Positionsmessvorrichtung;
- Figur 4: die Dreispulenanordnung nach Figur 3, bedämpft durch das bewegliche Messelement in zwei verschiedenen Positionen;
- Figur 4a: eine teilweise bedämpfte Messspule und eine vollständig überdeckte Höhenmessspule wie in Fig. 4 in Aufsicht und Seitenansicht;
- Figur 5: eine Messspule mit rechteckiger Grundform und alternativ eine Messspule mit trapezförmiger Aufweitung der rechteckigen Grundform;
- Figur 6: ein Diagramm der Kennlinie eines erfindungsgemäßen Messoszillators;
- Figur 7: ein Diagramm für die Frequenzzählung der Referenzoszillatoren unter verschiedenen Messbedingungen;
- Figur 8: ein elektrisches Blockschaltbild eines ersten Ausführungsbeispiels zur Ergebnisberechnung in der Auswerteschaltung;
- Figur 9: ein elektrisches Blockschaltbild des ersten Ausführungsbeispiels zur Normierwert- und Messzeitberechnung in der Auswerteschaltung;
- Figur 10: ein Zähldiagramm wie in Figur 7, zur Erläuterung einer zweiten Ausführungsform der Auswerteschaltung;
- Figur 11: ein elektrisches Blockschaltbild des zweiten Ausführungsbeispiels zur Ergebnisberechnung in der Auswerteschaltung;
- Figur 12: ein elektrisches Blockschaltbild des zweiten Ausführungsbeispiels zur Normierwert- und Messzeitberechnung in der Auswerteschaltung;
- Figur 13: ein Diagramm zur Ermittlung eines Divisionsfaktors, der in der zweiten Ausführungsform benötigt wird
- Figur 14a: eine Mehrspulenanordnung vergleichbar mit derjenigen in Fig. 4a, wobei die Höhenmessspule von Fig 4a durch vier Höhenmessspulen ersetzt ist;
- Figur 14b: eine lineare Kennlinie wie im linearen Bereich der Kennlinie von Fig. 6, jedoch mit einem zusätzlichen Effekt der Verkippung des Messelements in beliebiger Richtung;
- Figur 15a: eine Mehrspulenanordnung vergleichbar mit derjenigen in Fig. 2, wobei die Höhenmessspule von Fig 2 durch zwei Höhenmessspulen ersetzt ist;
- Figur 15b: eine lineare Kennlinie wie im linearen Bereich der Kennlinie von Fig. 6, jedoch mit einem zusätzlichen Effekt der Verkippung des Messelements in einer Hauptrichtung;
- Figur 16: eine Anordnung einer Messspule nach der Erfindung mit einer redundanten, segmentierten Messspulenanordnung;

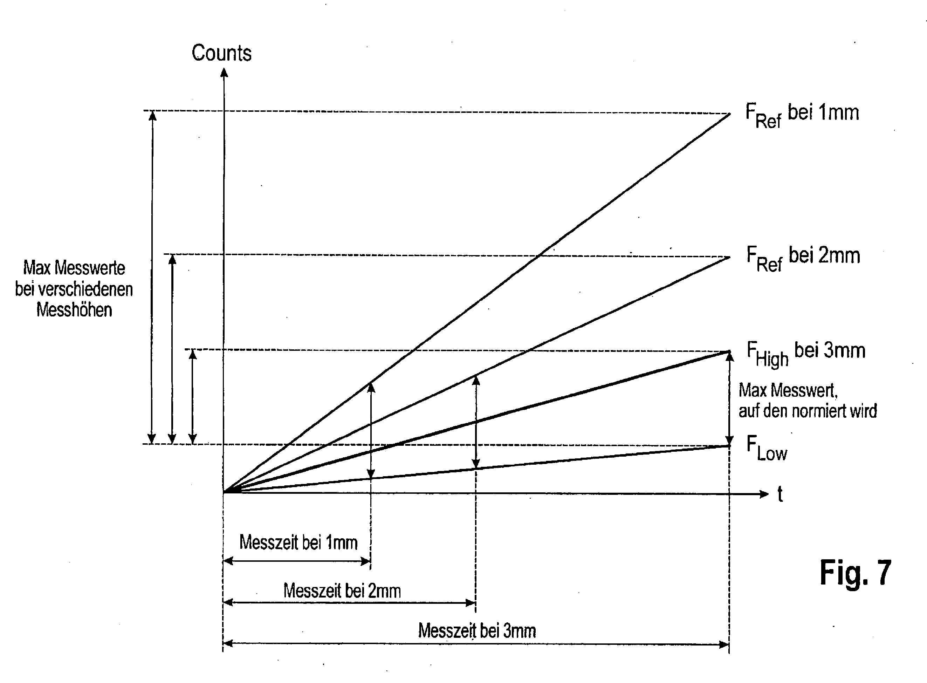

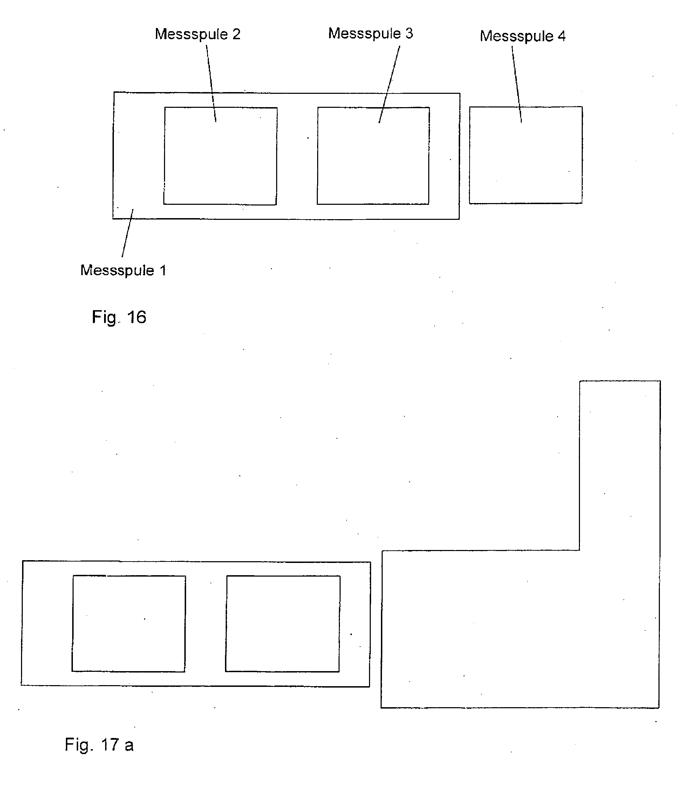

- Figur 7a-c :: die redundante Messspulenanordnung nach Fig. 16 mit einem, beweglichen Messelement in drei verschiedenen Stellungen der Überdeckungen

Eine nicht dargestellte Ausführungsform offenbart eine Zweispulenanordnung mit Messelement als Teil der Positionsmessvorrichtung und offenbart das Grundprinzip einer Messspule, die partiell von einem Wirbelstrom-Dämpfungselement überdeckt ist Eine zweite Spule wird in diesem Fall ebenfalls als Messspule genutzt; ihre partielle Überdeckung ist gegenläufig zu derjenigen der ersten Messspule Beide Spulen sind in bekannter Weise planar auf einer Leiterplatte aufgebracht; die Anschlussenden der Spulen-Leiterbahnen sind mit Kondensatoren und weiteren Schaltungsbestandteilen zu Oszillatoren verbunden. Für jede Spule kann eine Windung genügen; es können jedoch auch mehrere Windungen eine flache Spirale bilden.

Die zwei Flachspulen haben rechteckige Grundformen und sind in Messrichtung hintereinander angeordnet. In einer vorbestimmten Abstandshöhe über den Flachspulen ist das leitfähige Wirbelstrom-Dämpfungselement als bewegliches Messelement geführt. Nach einem alternativen Messprinzip könnte da Messelement auch aus einem weichmagnetischen Material wie Ferrit bestehen Innerhalb eines Messbereiches, der von fast vollständiger Überdeckung einer Messspule bis zur fast vollständigen Freigabe dieser Spule reicht, wird der Messweg zurückgelegt, auf dem die aktuelle Position des Messelements zu bestimmen ist Die Zweispulenanordnung mit gegensinniger Wirkung eignet sich besonders für eine steilere Kennlinie der Messeinrichtung, also für eine höhere Empfindlichkeit.

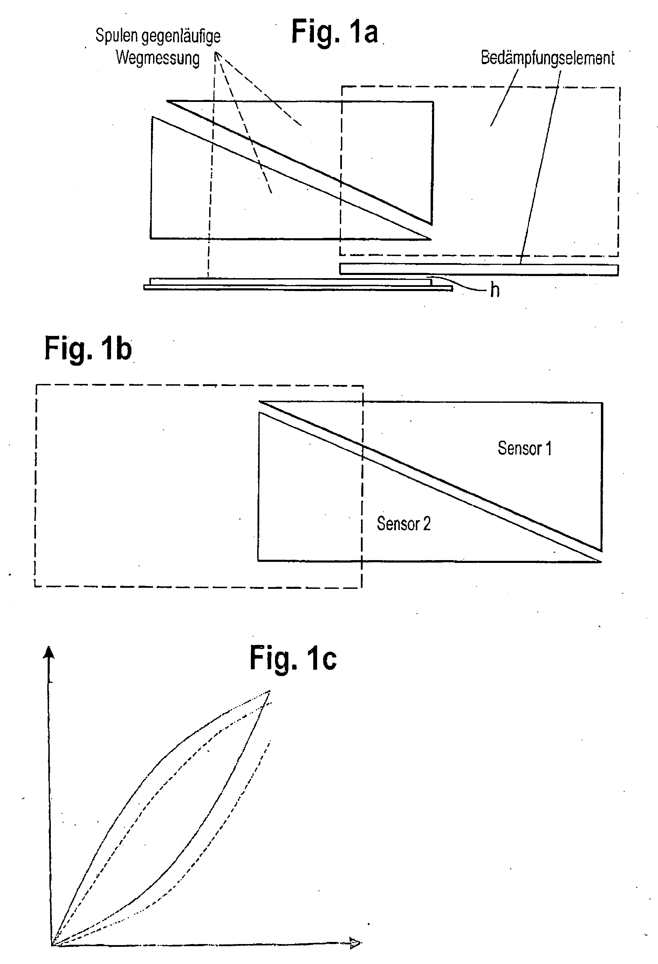

Die Figuren 1a und 1b zeigen eine zu Figur 1 bezüglich der Stossstelle zwischen den Spulen alternative Differentialspulenanordnung, die ebenfalls bei der Erfindung vorteilhaft zum Einsatz kommen kann. In an sich bekannter Weise weisen die Messspulen eine dreieckige Grundform auf und sind mit einer diagonalen Trennung zu einer rechteckigen Anordnung zusammengesetzt. Der Signalverlauf in Abhängigkeit von der Position des Messelements ist gegensinnig und wiederum wird das Differenzsignal bestimmt Die Kennlinien gemäß Figur 1c können in diesem Fall helfen, eine statische (toleranzbedingte) oder dynamische (bewegungsbedingte) Änderung des Abstands und/oder der Verkippung des Messelements zu kompensieren Wie die Seitensicht gemäß Figur 1 a zeigt, ist das Positionsmessergebnis empfindlich gegenüber Abweichungen von einer gleichmäßig parallelen Abstandshöhe h. In dem Kennlinienfeld gemäß Figur 1c zeigen die durchgezogenen Kennlinien die gegensinnigen, orts- bzw überdeckungsabhängigen Ausgangssignale der Sensoren 1 und 2 für den Fall einer gleichmäßig parallelen Abstandshöhe h. Zum Vergleich zeigen die gestrichelten Kennlinien den idealisierten Signalverlauf mit Verkippung In diesem Ausführungsbeispiel liegt die rechte Kante des Dämpfungselements höher als die linke Kante des Bedämpfungselementes.

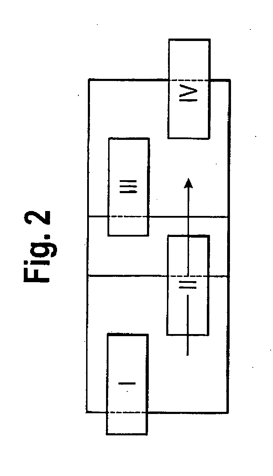

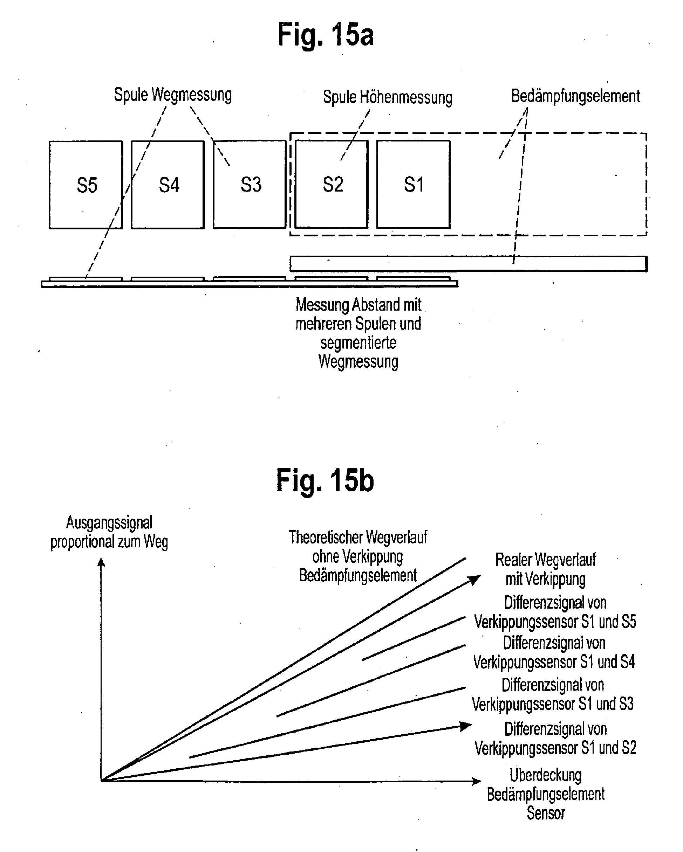

In Figur 2 ist die Zweispulenanordnung gemäß Figur 1 zu einer Vierspulenanordnung erweitert Das bewegliche Messelement ist relativ länger als in Figur 1; es kann hier zwei benachbarte Flachspulen überdecken Der Versatz der Messspulen quer zur Positionsmessrichtung ist optional; die Spulen können gemäß Figur 15 a auch auf einer Linie liegen Wenn sich das bewegliche Messelement in der linken Hälfte des Messbereichs aufhält, so übernehmen die oberen Spulen I und III die Funktion als Messspulen, analog zu Figur 1 Von den unteren Spulen ist II vollständig überdeckt und IV vollständig unbedeckt. Ihre Signale können in der Auswerteschaltung als Referenzsignale benutzt werden Die permanent bedämpfte Spule II gehört zu einem Hochfrequenzoszillator, dessen Signal ein Maß für die Abstandshöhe des beweglichen Messelements über der gesamten Spulenanordnung ist Die permanent unbedämpfte Spule IV gehört zu einem Niedrigfrequenzoszillator, dessen Signal ein Maß für die Umgebungstemperatur und für andere Störgrößen wie z B die Bauteilealterung ist.

Wenn sich das bewegliche Messelement der Vierspulenanordnung im rechten Teil des Messbereichs befindet, so kehren sich die Funktionen um. Die unteren Spulen II und IV sind nun nach Art von differentiellen Messspulen partiell und gegenläufig überdeckt, während die oberen Spulen I und III jetzt als Referenzspulen benützt werden können. Diese Spulenanordnung ist dann geeignet, wenn genügend Platz für die Messeinrichtung zur Verfügung steht und wenn die Messung besonders genau und besonders störungsfrei erfolgen soll.

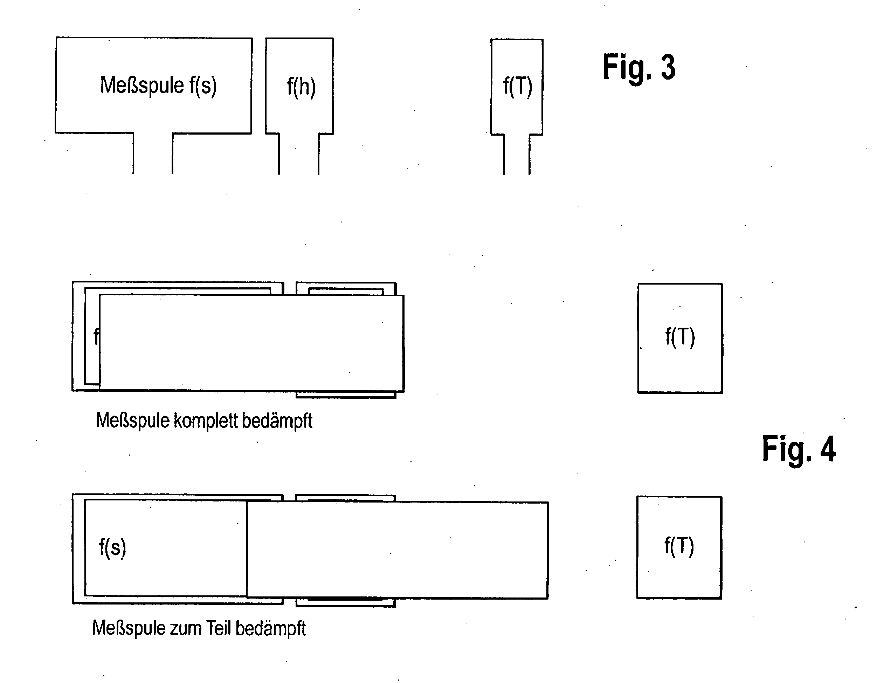

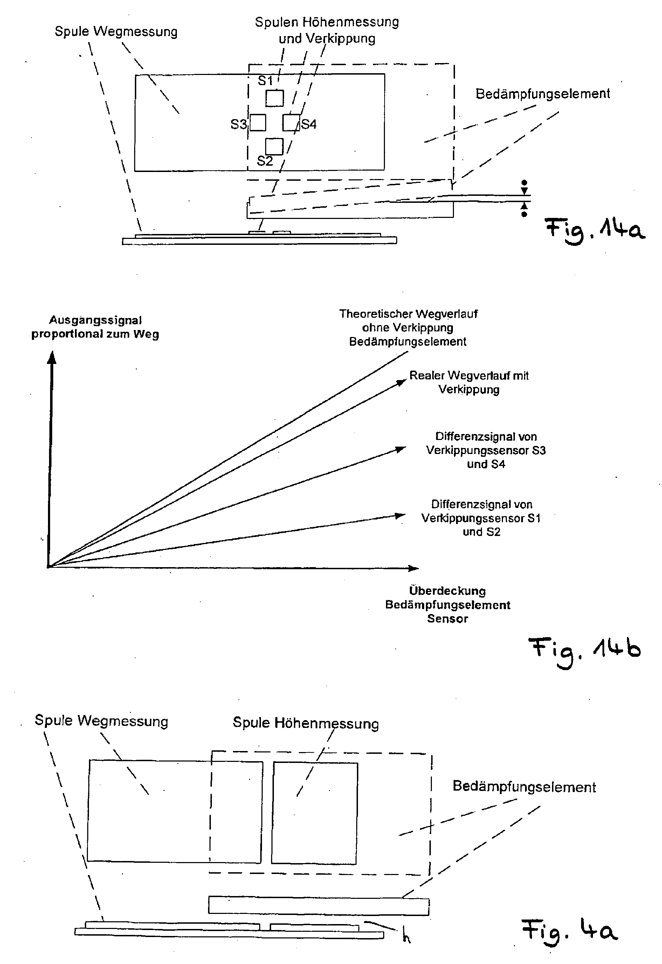

Die Figur 3 zeigt eine weitere bevorzugte Möglichkeit der Spulenanordnung mit einer Messspule, einer Hochfrequenzspule und einer Niedrigfrequenzspule Die Figur 4 zeigt das dazugehörige Messelement in zwei verschiedenen Positionen des Messbereichs. Die Messspule ist abhängig vom Grad der Überdeckung bedämpft, so dass ihr Signal in erster Linie eine Funktion f(s) der Position s ist In dieses Messsignal gehen aber auch die Störungen ein, die von einer unstabilen Abstandshöhe h und von einer wechselnden Betriebstemperatur T herrühren Um Signale zur Kompensation dieser Störungen zu gewinnen, eignen sich die nahe bei der Messspule liegende Hochfrequenzspule mit ihrer Messfunktion f(h) und die entfernt von der Messspule liegende Niedrigfrequenzspule mit ihrer Messfunktion f(T) Die vom Mess- oder Bedämpfungselement beeinflusste Hochfrequenzspule und die Messspule sind in Figur 4a auch im Seitenriss dargestellt, um den Parameter der Abstandshöhe h zu verdeutlichen. In der Praxis kann das Bedämpfungselement sowohl toleranzbedingt als auch dynamisch durch die Belastung der Mechanik verkippen. Bei einigen Getriebesensoren genügt es, eine Verkippung in der Messrichtung s zu berücksichtigen, bei anderen Getriebesensoren kann die Verkippung in mehrere Achsen erfolgen.

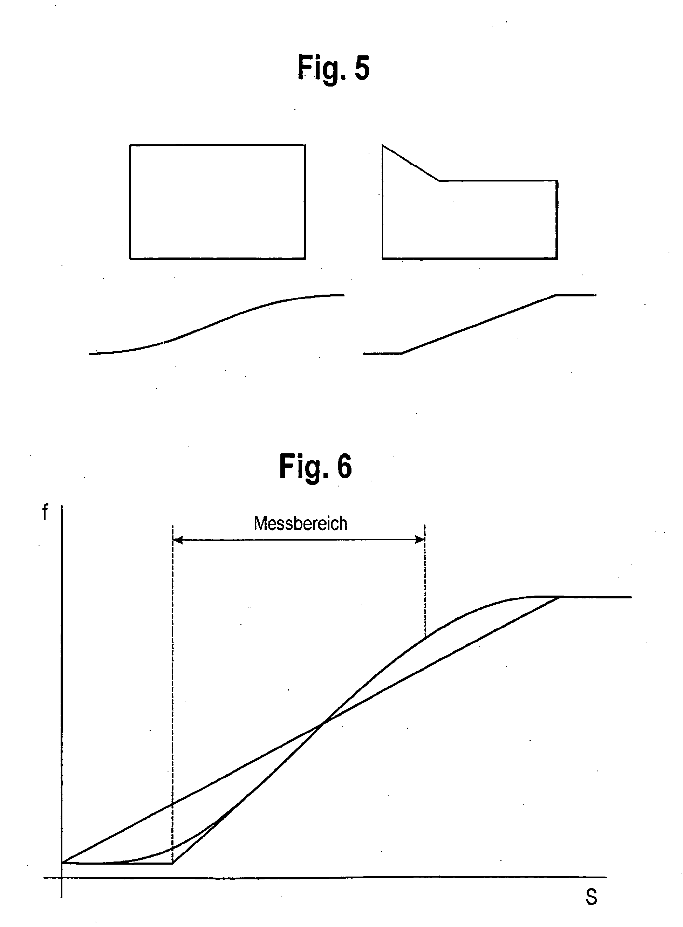

Die Figur 5 zeigt eine Möglichkeit, die rechteckige Grundform der Messspule gemäß Figur 1 zu verändern und dadurch die Kennlinie zu verbessern Die symbolische Darstellung der Kennlinien (ebenfalls in Figur 5) ist in Figur 6 genauer dargestellt. Das Kennliniendiagramm zeigt auf der Abszisse die Position s des beweglichen Messelements und auf der Ordinate die Pulsfrequenz f des digitalen Oszillators, der die partiell überdeckte Messspule enthält. Grundsätzlich nimmt die Oszillatorfrequenz f mit zunehmender Überdeckung s der Messspule durch das Messelement zu. Als Messbereich gut nutzbar ist jedoch nur ein Teil des Übergangsbereiches mit etwa linearer Kennlinie Um diesen Messbereich möglichst breit zu machen und auch um die Linearität innerhalb des Messbereiches zu verbessern, eignet sich die in Figur 5 dargestellte Modifikation der rechteckigen Grundform der Messspule Durch die trapezförmige Aufweitung des Grundrisses am linksseitigen Ende des Messbereiches lässt sich die Krümmung am Ende der Kennlinie zu einem Knick ausprägen. Dabei ist die Trompeten- oder Trapezform in Figur 5 beispielhaft zu verstehen; der Fachmann kann durch einfache Versuche die günstigste Grundrissform ermitteln.

Die für den Anwendungszweck ausgewählte Spulenanordnung wird zusammen mit den übrigen Oszillatorbaugruppen und der digitalen Auswerteschaltung auf einer Leiterplatte angeordnet Die gesamte Leiterplattenanordnung wird in ein Aluminiumgehäuse eingesetzt und vergossen Die so montierte Messeinrichtung hat eine kompakte Form ohne bewegliche Teile. Das bewegliche Messelement ist nach Form und Material einfach zu definieren, so dass es in einem ganz anderen Herstellungsprozess (beispielsweise als Fahne, die beim Guss einer Schaltschwinge angegossen ist) produziert werden kann und dennoch sicher und störungsfrei mit der vergossenen Leiterplattenanordnung zusammenarbeiten kann.

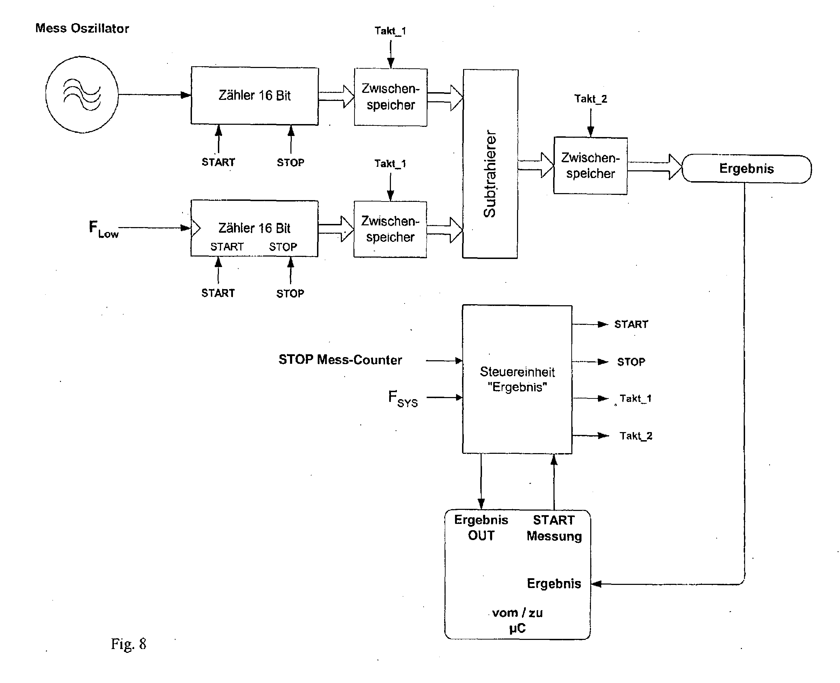

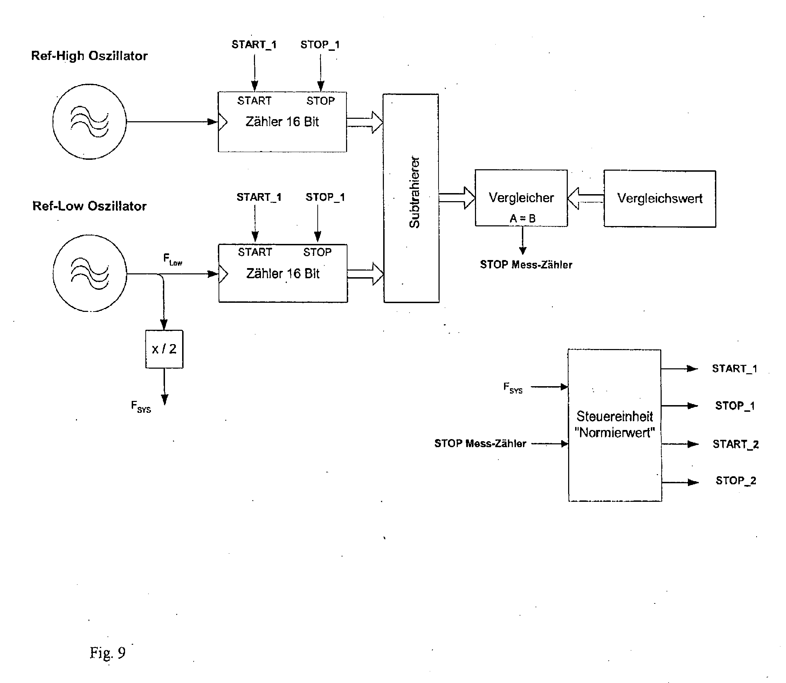

Die Blockschaltbilder gemäß Figur 8 und 9 zeigen, wie die Signale der Oszillatoren in die Auswerteschaltung eingespeist werden Jedes Oszillatorsignal wird in der Eingangsstufe einem Frequenzzähler zugeführt, der während einer bestimmten Messzeit die Impulse zählt Dem zugehörigen Diagramm in Figur 7 ist zu entnehmen, wie die Zählerstände der beiden Referenzoszillatoren während der Messzeit hochlaufen Am langsamsten steigt der Zählerstand F_{low} des unbedämpften Niedrigfrequenzoszillators Der Anstieg des Hochfrequenzoszillators erfolgt schneller wegen dessen vollständiger Überdeckung (kleinere Induktivität heißt höhere Oszillatorfrequenz). Eine Abstandshöhe von 3 mm wird als Normalfall definiert, der die notwendige Positionsauflösung garantiert Für diese Messbedingung wird ein maximaler Messwert vorgegeben, auf den alle nachfolgenden Zählwerte normiert werden Der maximale Messwert ist die Differenz zwischen den Zählerständen des Hochfrequenzoszillators und des Niedrigfrequenzoszillators, die während der Messzeit aufläuft Der Zählerstand der partiell überdeckten Messspule liegt folglich zwischen diesen beiden umgebungsdefinierten Grenzwerten.

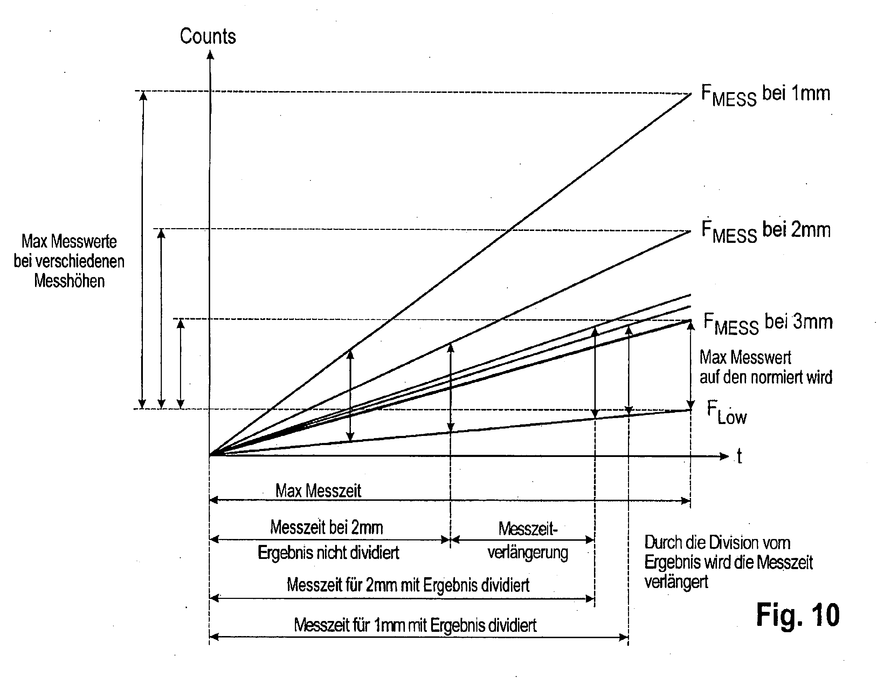

Aufgrund der oben diskutierten Störeinflüsse des unabhängig von der Spulenanordnung montierten Messelements kann sich die Abstandshöhe von dem Wert 3 mm auf beispielsweise 2 mm oder 1 mm verringern, Unter diesen Messbedingungen steigen die Zählerstände des Hochfrequenzoszillators schneller an Da die Auswerteschaltung den maximalen Messwert, auf den normiert wird, beibehält, verkürzt sich unter diesen Messbedingungen die Messzeit. Im ersten Ausführungsbeispiel der Auswerteschaltung (Figuren 8 und 9) wird beispielsweise anlässlich der Kalibrierung der Messeinrichtung und auch fortlaufend während der Messung festgestellt, dass die Abstandshöhe und damit die Messzeit in der Nähe des festgelegten Normbereichs liegen Damit genügt als Auswerteschaltung das Ausführungsbeispiel nach den Figuren 8 und 9. Anhand der Figuren 10 bis 13 wird später ein zweites Ausführungsbeispiel diskutiert, das bei anderen, von der Norm abweichenden Messbedingungen zu einer Ergebnisdivision führt.

In Figur 8 werden die Signale des Messoszillators und des Niedrigfrequenzoszillators zu dem Positionsmessergebnis verarbeitet In der Eingangsstufe werden die Pulsfrequenzen gezählt. Hierzu liefert die Steuereinheit "Ergebnis" Start- und Stoppsignale für die Zähler, wozu sie eine allgemeine Systemfrequenz F_{sys} und eine Information über die Messzeit benötigt, die beide aus der Schaltung gemäß Figur 9 hergeleitet werden Der asynchrone Zähler für den Niedrigfrequenzoszillator läuft gemäß Figur 7 in der maximalen Messzeit hoch und liefert einen Bezugswert, der die Umgebungstemperatur widerspiegelt Das Signal des Messoszillators enthält im Zählerstand seines asynchronen Zählers zusätzlich den Einfluss der partiellen Überdeckung durch das Messelement. Der Subtrahierer gemäß Figur 8 liefert einen temperaturunabhängigen Differenzwert Zur Nacheichung oder Anpassung der Messzeit wird derjenige Teil der Auswerteschaltung benützt, der in Figur 9 dargestellt ist Aus der Frequenz F_{low} des Niedrigfrequenzoszillators wird die Systemfrequenz F_{sys} abgeleitet, mit der die Steuereinheit "Normierwert" (Figur 9) und die Steuereinheit "Ergebnis" (Figur 8) getaktet werden Ein gesonderter Taktoszillator ist nicht erforderlich. Als Systemfrequenz F_{sys} kann die Pulsfrequenz des Niedrigfrequenzoszillators direkt verwendet werden oder es kann auch ein Frequenzteiler zwischengeschaltet werden. In Figur 9 wird die niedrigste der Oszillatorfrequenzen durch zwei geteilt, um den Systemtakt zu erzeugen.

Die asynchronen Zähler in der Eingangsstufe und der Subtrahierer sind in Fig 9 vergleichbar mit Figur 8, jedoch liefert statt des Messoszillators der Hochreferenzoszillator den maximal möglichen Zählwert (vgl. Figur 7) Wenn diese Differenz einen vorgegebenen Maximalwert erreicht, liefert ein Vergleicher eine Information über die Messzeit (Stop Mess Counter). Diese Messzeitinformation wird von den Steuereinheiten in Figur 8 und Figur 9 benötigt, um die Start- und Stoppsignale für die Zähler und die Übernahmesignale für die Speicher vor und hinter dem Subtrahierer zu ermitteln.

Die Auswerteschaltung gemäß Figur 8 und 9 kann als Gate Array (GA), als Field Frogrammable Gate Array (FPGA) oder als Application Specific Integrated Circuit (ASIC) realisiert werden In der bevorzugten Ausführungsform sind Gate Arrays als sensornahe, asynchron laufende Auswerteschaltungen vorgesehen.

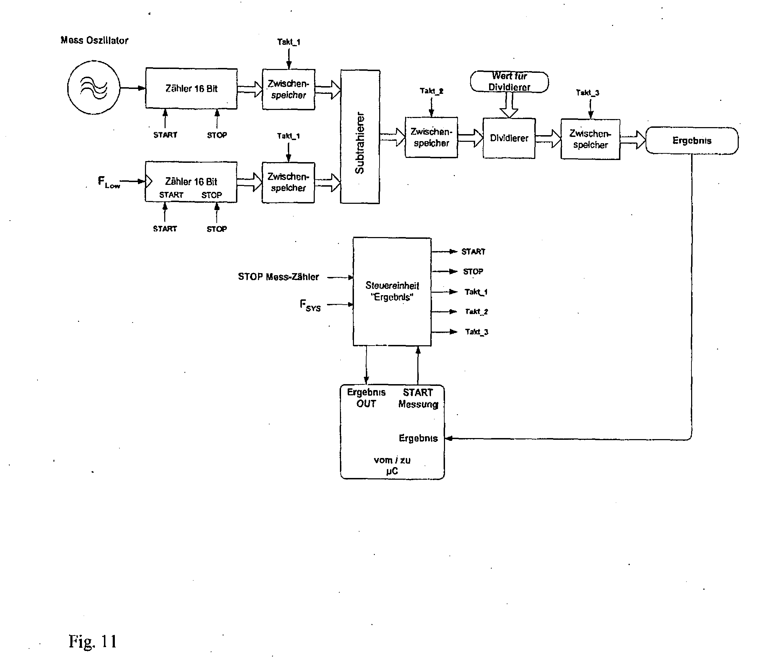

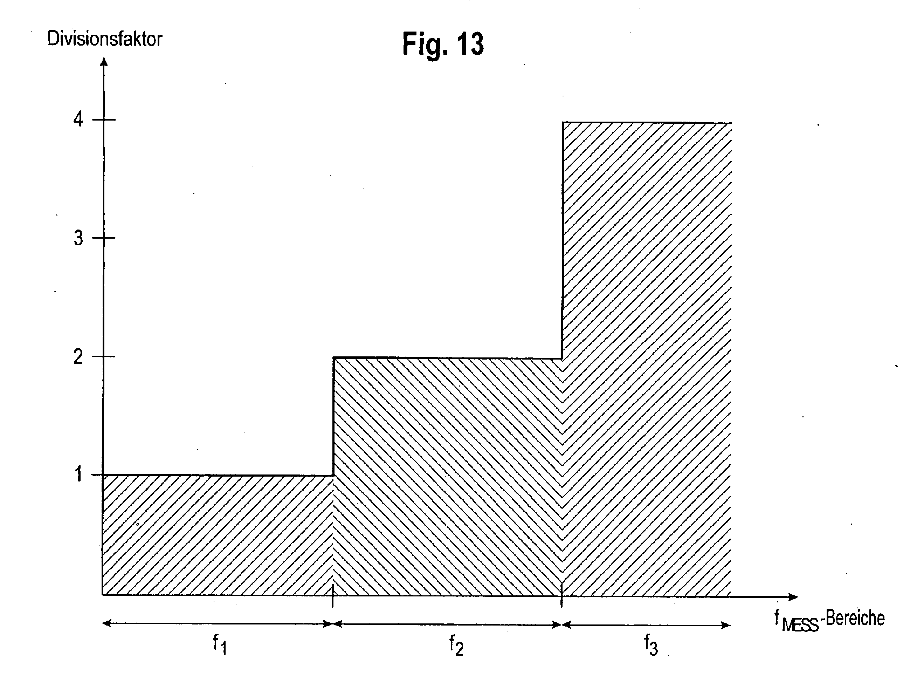

In Figur 10 ist eine Variante der Messzeitberechnung dargestellt, die dann angewandt wird, wenn aufgrund von mechanischen Toleranzen die Abstandshöhe auf 2 mm oder 1 mm verringert sein sollte. In diesem Fall würden die Zählerstände über den festgelegten Maximalwert ansteigen. Diesem Umstand wird in einem zweiten Ausführungsbeispiel der Auswerteschaltung durch eine Ergebnisdivision Rechnung getragen. Damit die in der quasi verlängerten Messzeit erzielten Zählerstände vergleichbar bleiben und den festgelegten Normierwert nicht überschreiten, wird die Auswertung gemäß Figur 11 durch eine Division des Subtraktionsergebnisses ergänzt Für hohe Frequenzen in einem Frequenzbereich f3 wird der Divisionsfaktor 4 benützt (siehe Figur 13), für weniger erhöhte Frequenzen in einem Frequenzbereich f2 wird der Divisionsfaktor 2 in den Rechenweg eingespeist (siehe ebenfalls Figur 13) In dem als Norm herangezogenen Frequenzbereich f1 gilt der Divisionsfaktor 1, d.h es wird die bereits anhand der Figur 8 erläuterte Berechnung vorgenommen.

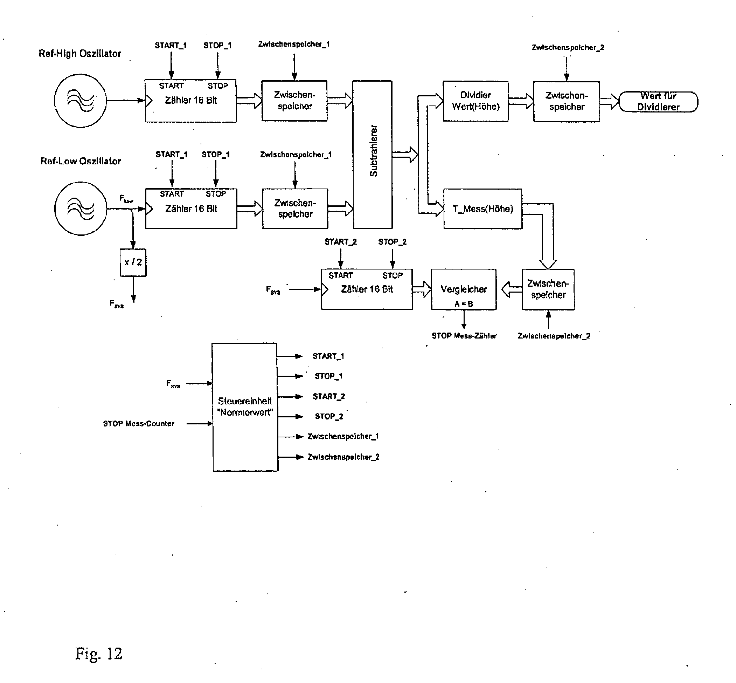

Die Berechnung der Messzeit ist in dem zweiten Ausführungsbeispiel komplizierter (vgl. Figur 12). Die Berechnung der Differenz zwischen dem Hochfrequenzoszillator und dem Niedrigfrequenzoszillator überschreitet in diesem Fall den Frequenzbereich f1 von Figur 13 und führt zu zweierlei Erstens wird aus dieser Differenz der Wert des Divisors ermittelt, der in Figur 11 für den zusätzlichen Divisionsvorgang benötigt wird Zweitens wird in einer speziellen Berechnung eine Messzeitinformation ermittelt, die den Steuereinheiten "Normierwert" und "Ergebnis" zugeführt wird.

In der Verwendung als Getriebesensor wird das bewegliche Messelement nicht zusammen mit dem Leiterplatte montiert, welche die induktiven Sensoren trägt Vielmehr wird das Plättchen auf der Schwinge des Doppelkupplungsgetriebes angebracht Der funktionswichtige Abstand von den Sensorspulen ist nach dem Zusammenbau relativ variabel, auch eine relative Verkippung des Messelements ist zu berücksichtigen, die dazu führen kann, dass der Abstand des Messelements zu der Messspule geringer ist als der Abstand zu der Referenzspule Zur Kompensation ist pro Kipprichtung mindestens eine weitere Referenzspule erforderlich, mit deren Hilfe auf den tatsächlichen Abstand im Bereich der Messspule geschlossen werden kann. Die Störgrößen Abstandshöhe und Verkippung können sich sogar dynamisch, d.h während der betriebsbedingten Messbewegung ändern, wenn die Messbewegung nicht ganz parallel zu der Ebene der Flachspulen erfolgt.

Figur 14a zeigt eine mit Figur 4b funktional vergleichbare Spulenanordnung, mit der nicht nur die Störung durch eine Änderung der parallelen Abstandshöhe h, sondern auch die zusätzliche Störung durch einen Verkippungswinkel kompensiert werden kann. Die eine Höhenmessspule gemäß Figur 4a ist hier durch drei oder mehr, im bevorzugten Ausführungsbeispiel durch vier Hochfrequenzspulen S1 bis S4 ersetzt Die Verkippung in zwei Achsen macht sich durch unterschiedliche Höhen des Messelements über den Hochfrequenzspulen S1 bis S4 bemerkbar. Gemessen werden wiederum Differenzsignale. In der zugehörigen Figur 14b ist jeweils der lineare Teil der Kennlinie gemäß Figur 5 und Figur 6 dargestellt. Im Beispiel ist die Verkippung in Richtung der Sensoren S3-S4 größer als die Verkippung in Richtung der Sensoren S1-S2. Demgemäß ist das Differenzsignal S3-S4 in dem zugehörigen Kennlinienfeld gemäß Figur 14b größer Mithilfe der festgestellten Verkippung kann dann von dem realen Signalverlauf mit Verkippung auf einen theoretischen, ungestörten, idealen Signalverlauf ohne Verkippung zurückgeschlossen werden Dabei stellt das reale Messsignal die Differenz zwischen der Frequenz des Messoszillators und der Frequenz eines Hochfrequenzoszillators dar, beispielsweise der Frequenz in der Referenzspule S3.

Die Figuren 15a und 15b zeigen in analoger Weise eine Verkippungskompensation für nur eine Hauptrichtung Häufig tritt die Verkippung nur so auf, dass das Verkippungssignal S1-S2 in Figur 14b Null ist Deshalb sind in Figur 15a mehrere Spulen in Reihe angeordnet und so betrieben, dass die jeweils nur teilweise überdeckte Spule (z.B. S3) der Wegmessung dient, während die komplett überdeckten Spulen (z B S1 und S2) den Abstand des Messelements feststellen In einer weiteren Ausführungsform können die Spulen S1 bis S4 auch auf einem Kreisbogen oder Kreisumfang angeordnet werden, so dass aus der Positionsmesseinrichtung eine Winkelmesseinrichtung wird.

Bei einem Verkippen des Bedämpfungselements kann der Verkippungswinkel durch unterschiedliche Höhen h1, h2, welche die komplett bedämpften Spulen S1, S2 liefern, errechnet werden Damit kann das Wegsignal der Spule S3 korrigiert werden Je mehr Spulen komplett bedämpft werden, desto genauer ist diese Höhenmessung und diese Korrektur.

In Figur 15a können in der dargestellten Messposition die (vollständig überdeckten) Spulen S1 und S2 als Höhenmessspulen aufgefasst werden, während die anschließenden Spulen S3, S4 und S5 einer segmentierten Wegmessung dienen, weil sie nacheinander partiell überdeckt werden. Eine solche Kombination von Höhenspulen mit segmentierter Wegmessung kann auch Teil einer redundanten Wegmessung sein, wie sie in Figur 16 dargestellt ist Redundante Wegmessung bedeutet hier, dass zusätzlich zu der normalen Messspule 1 in einer anderen Ebene - über oder unter der ersten Messspule - eine weitere Spulenanordnung im selben Messbereich angeordnet ist Die Messbereiche der beiden redundanten Spulenanordnungen können sich auch nur teilweise überlappen, was in Figur 16 durch die Messspule 4 angedeutet ist.

Die Figuren 17a bis 17c zeigen die redundante Messspulenanordnung von Figur 16, wie sie von dem beweglichen Messelement in drei verschiedenen Positionsmessstellungen überdeckt wird. Die drei gezeigten Positionen des Mess- oder Betätigungselements decken den Messbereich der hauptsächlichen Messspule 1 ab Außerdem werden die redundanten Messspulen 2 und 3 als segmentierte Spulenanordnung genutzt, die etwa denselben Messbereich aufweist wie die hauptsächliche Messspule 1 Bei einem Ausfall der Messspule 1 kann daher die Positionsmessung immer noch mit Hilfe der redundanten Messspulen 2 und 3 erfolgen.

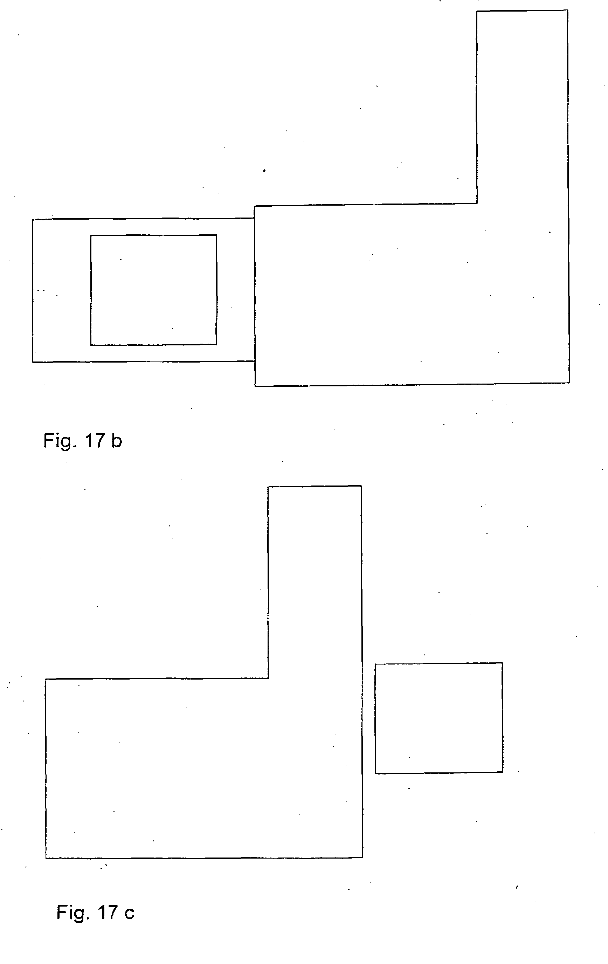

Die Messspule 4 dient in diesem Bereich als Höhenmessspule zur Korrektur von Abstandsänderungen, wie oben beschrieben In der letzten Position gemäß Figur 17c (also beim Übergang von der Mittenposition gemäß Figur 17b zur Endposition gemäß Figur 17c) übernimmt die dann stets überdeckte Messspule 3 die Funktion der Höhenmessspule.

Zusammenfassend kann also zu den Figuren 16 und 17 festgestellt werden, dass mit einer Höhenmessspule auch eine Plausibilisierung des Vorhandenseins eines beweglichen Bedämpfungs- oder Messelements ermittelt werden kann Bei mehreren Höhenspulen kann auch eine gröbere Position des Bedämpfungselements angegeben werden In Bezug auf sicherheitsrelevante Systeme erfolgt eine Klassifikation gemäss SIL 1 bis 3, wobei diese Norm IEC-61508 unabhängige Software-Abläufe und unabhängige Hardwarepfade fordert, um bei Ausfall eines Auswertepfades noch eine Rückfallposition zu ermöglichen Diese Forderung ist in der redundanten Anordnung gemäß den Figuren 16 und 17, wie sie für Getriebesensoren eingesetzt werden kann, erfüllt unter dem Aspekt, dass die eigentliche Wegsensorik eventuell ausfällt und dennoch zumindest eine Grobposition der Aktuatorik (rechts, mittig, links) möglich ist. In der Stellung gemäß Figur 17a ist die Wegspule 1 nur gering bedämpft und die Höhenspule 4 ist komplett bedämpft. So kann über die Höhenspule 4 zusätzlich ermittelt werden, dass sich das System im rechten Bereich befindet. Wenn das Bedämpfungselement in der Mitte steht (Figur 17b), ist die Wegspule 1 teilweise bedämpft, während die Spulen 3 und 4 als Höhenspulen komplett bedämpft sind. So kann über die Höhenspulen 3, 4 redundant ermittelt werden, dass sich das System im mittleren Bereich befindet Wenn das Bedämpfungselement links steht (Figur 17c), so ist die Wegspule 1 komplett bedämpft und die Höhenspulen 2 und 3 sind auch komplett bedämpft. Somit kann über die Höhenspulen 2, 3 redundant oder zusätzlich ermittelt werden, dass sich das System im linken Bereich befindet.

## Patentansprüche

1. Induktive Positions- oder Winkelmesseinrichtung mit zwei oder mehr digitalen Oszillatoren, die mindestens eine Messspule (I, II, III, IV) enthalten, **dadurch gekennzeichnet, dass** ein erster Oszillator als Messoszillator eine Messspule (I, II, III, IV) enthält, die aufgrund von Induktivitätsänderungen, die durch ein bewegliches Messelement abhängig vom Grad der Überdeckung zwischen der Messspule und dem Messelement erzeugt werden, eine Pulsfrequenz (f als Funktion von s; F Mess) des Messoszillators verändert, und dass ein zweiter Oszillator als Mess- oder Referenzoszillator eine Mess- oder Referenzspule (I, II, III, IV) enthält, wobei eine Referenzspule **dadurch** definiert ist, dass sie entweder vollständig überdeckt oder vollständig unbedeckt ist von dem beweglichen Messelement, so dass die Pulsfrequenz (f als Funktion von h; f als Funktion von T) des zugehörigen Referenzoszillators (Ref-High; Ref-Low) nicht vom Grad der Überdeckung abhängt, und mit einer digitalen Auswerteschaltung, in der die Pulsfrequenzen (f; F) gezählt und verrechnet werden, und wenn der zweite Oszillator eine Messspule enthält, die zwei Messspulen in Bewegungsrichtung des Messelementes so hintereinander angeordnet sind, dass die teilweise Überdeckung der einen Messspule zunimmt, wenn die teilweise Überdeckung der anderen Messspule abnimmt, so dass die auszuwertenden Pulsfrequenzen sich gegenläufig ändern.

2. Induktive Positions- oder Winkelmesseinrichtung nach Anspruch 1, **dadurch gekennzeichnet, dass** der Betrieb der Auswerteschaltung mit Hilfe einer Systemfrequenz (F Sys) getaktet wird, die aus der Pulsfrequenz (F Low) eines der Oszillatoren abgeleitet ist.

3. Induktive Positions- oder Winkelmesseinrichtung nach Anspruch 1 oder 2, **dadurch gekennzeichnet, dass** die in der digitalen Auswerteschaltung gezählten Pulsfrequenzen (F Mess, F Ref, F High, F Low) paarweise verrechnet werden.

4. Induktive Positions- oder Winkelmesseinrichtung nach Anspruch 1 bis 3, **gekennzeichnet durch** mindestens eine Referenzspule (I, II, III, IV).

5. Induktive Positions- oder Winkelmesseinrichtung nach Anspruch 4, **dadurch gekennzeichnet, dass** ein zweiter Oszillator als Niedrigreferenzoszillator (Ref Low) eine von dem beweglichen Messelement unbedeckte Referenzspule (I, II, III, IV) enthält, so dass eine Pulsfrequenz (f als Funktion von T; F Low) des Niedrigreferenzoszillators (Ref Low) zur Kompensation von frequenzbeeinflussenden Parametern wie z.B. Umgebungstemperatur (T) und Bauteilealterung dient.

6. Induktive Positions- oder Winkelmesseinrichtung nach Anspruch 4, **dadurch gekennzeichnet, dass** ein zweiter Oszillator als Hochreferenzoszillator (Ref High) eine von dem beweglichen Element vollständig überdeckte Referenzspule (I, II, III, IV) enthält, so dass eine Pulsfrequenz (f als Funktion von h; F High) des Hochreferenzoszillators (Ref High) zur Kompensation von unerwünschten Änderungen der Abstandshöhe (h) der Spulen (I, II, III, IV) von dem Messelement dient.

7. Induktive Positions- oder Winkelmesseinrichtung nach Anspruch 4, **dadurch gekennzeichnet, dass**
ein zweiter Oszillator als Niedrigreferenzoszillator (Ref Low) eine von dem beweglichen Messelement unbedeckte Referenzspule (I, II, III, IV) enthält, so dass eine Pulsfrequenz (f als Funktion von T; F Low) des Niedrigreferenzoszillators (Ref Low) zur Kompensation von frequenzbeeinflussenden Parametern wie z.B. Umgebungstemperatur (T) und Bauteilealterung dient,
und dass ein dritter Oszillator als Hochreferenzoszillator (Ref High) eine von dem beweglichen Element vollständig überdeckte Referenzspule (I, II, III, IV) enthält, so dass eine Pulsfrequenz (f als Funktion von h; F High) des Hochreferenzoszillators (Ref High) zur Kompensation von unerwünschten Änderungen der Abstandshöhe (h) der Spulen (I, II, III, IV) von dem Messelement dient.

8. Induktive Positions- oder Winkelmesseinrichtung nach Anspruch 1, **dadurch gekennzeichnet, dass** der zweite Oszillator und ein dritter Oszillator als Hochreferenzoszillatoren jeweils eine von den beweglichen Messelementen vollständig überdeckte Referenzspule enthalten, so dass die Pulsfrequenzen der Hochreferenzoszillatoren zur Kompensation von unerwünschten Änderungen der Abstandshöhe der Spulen von dem Messelement sowie zur Kompensation einer unerwünschten Verkippung des Messelements in Messrichtung dienen.

9. Induktive Positions- oder Winkelmesseinrichtung nach Anspruch 8, **dadurch gekennzeichnet, dass** ein vierter Oszillator als Hochreferenzoszillator eine von dem beweglichen Messelement vollständig überdeckte Referenzspule enthält, so dass die Pulsfrequenz auch dieses Hochreferenzoszillators zur Kompensation von unerwünschten Änderungen der Abstandshöhe der Spulen von dem Messelement sowie zur Kompensation einer unerwünschten Verkippung des Messelements in beliebiger Richtung dient.

10. Induktive Positions- oder Winkelmesseinrichtung nach Anspruch 1, **dadurch gekennzeichnet, dass**
zwei Messspulen in Bewegungsrichtung des Messelementes so hintereinander angeordnet sind, dass die teilweise Überdeckung der einen Messspule zunimmt, wenn die teilweise Überdeckung der anderen Messspule abnimmt, so dass die auszuwertenden Pulsfrequenzen sich gegenläufig ändern.

11. Induktive Positions- oder Winkelmesseinrichtung nach Anspruch 9, **dadurch gekennzeichnet, dass**
die Pulsfrequenzen einer Messspule und einer unbedeckten Referenzspule verrechnet, insbesondere subtrahiert werden zu einem Messergebnis, in welchem frequenzbeeinflussende Parameter wie z.B. Umgebungstemperatur und Bauteilalterung kompensiert sind

12. Induktive Positions- oder Winkelmesseinrichtung nach Anspruch 2, **dadurch gekennzeichnet, dass**
die Systemfrequenz aus der Pulsfrequenz des Oszillators mit der unbedeckten Referenzspule abgeleitet ist.

13. Induktive Positions- oder Winkelmesseinrichtung nach Anspruch 7, **dadurch gekennzeichnet, dass**
die Pulsfrequenzen der unbedeckten Referenzspule und der vollständig bedeckten Referenzspule verrechnet werden zu einem maximalen Messergebnis, das als Normierwert zur Anpassung einer Messzeit für die Zählung der Pulsfrequenzen der Oszillatoren herangezogen wird.

14. Induktive Positions- oder Winkelmesseinrichtung nach Anspruch 7, **dadurch gekennzeichnet, dass**
die drei Spulen planar auf einer Leiterplatte angeordnet sind.

15. Induktive Positions- oder Winkelmesseinrichtung nach Anspruch 7, **dadurch gekennzeichnet, dass**
zumindest eine der drei Spulen als diskretes Bauelement auf der Leiterplatte montiert, insbesondere in SMD-Bauweise verlötet ist.

16. Induktive Positions- oder Winkelmesseinrichtung nach Anspruch 15, **dadurch gekennzeichnet, dass**
zwei Spulen planar auf die Leiterplatte geätzt sind.

17. Induktive Positions- oder Winkelmesseinrichtung nach Anspruch 8, **dadurch gekennzeichnet, dass**
die planare Messspule eine rechteckige Grundform aufweist, die in einem partiell überdeckten Endbereich aufgeweitet, insbesondere trapezförmig aufgeweitet ist.

18. Induktive Positions- oder Winkelmesseinrichtung nach einem der Ansprüche 1 bis 17, **dadurch gekennzeichnet, dass**
jeder digitale Oszillator neben der Mess- oder Referenzspule zwei frequenzbestimmende Kondensatoren, einen Widerstand und einen Inverter umfasst.

19. Induktive Positions- oder Winkelmesseinrichtung nach Anspruch 1 bis 18, **dadurch gekennzeichnet, dass**
die Pulsfrequenzen der digitalen Oszillatoren in asynchronen Zählern gezählt werden.

20. Induktive Positions- oder Winkelmesseinrichtung nach Anspruch 2, **dadurch gekennzeichnet, dass**
der Betrieb eines synchronen Teils der Auswerteschaltung mit Hilfe einer Systemfrequenz getaktet wird, die direkt oder mittels eines digitalen Teilers aus der Pulsfrequenz eines der Oszillatoren abgeleitet ist.

21. Induktive Positions- oder Winkelmesseinrichtung nach Anspruch 9, **dadurch gekennzeichnet, dass** ein fünfter Oszillator als Hochfrequenzoszillator eine weitere, von dem beweglichen Messelement vollständig überdeckte Referenzspule enthält, so dass zu der Kompensation ein mittlerer Abstand und eine Verkippung durch vier Abstandsmessungen erfasst und rechnerisch auf den Bereich der Messspule transponiert werden können.

22. Induktive Positions- oder Winkelmesseinrichtung nach einem der Ansprüche 7 oder 9 oder 21, **dadurch gekennzeichnet, dass** ein weiterer Oszillator als Messoszillator eine Messspule enthält, wobei die zwei Messspulen in Bewegungsrichtung des Messelements so hintereinander angeordnet sind, dass die teilweise Überdeckung der einen Messspule zunimmt, wenn die teilweise Überdeckung der anderen Messspule abnimmt, so dass die auszuwertenden Pulsfrequenzen sich gegenläufig ändern.

23. Induktive Positions- oder Winkelmesseinrichtung nach Anspruch 22, **gekennzeichnet durch** weitere Messspulen in Bewegungsrichtung des Messelements.

24. Induktive Positions- oder Winkelmesseinrichtung mit zwei Messspulen nach einem der Ansprüche 23, 24 oder 25, **dadurch gekennzeichnet, dass** die planaren Messspulen eine rechteckige Grundform aufweisen (Fig. 1).

25. Induktive Positions- oder Winkelmesseinrichtung wiederum nach Anspruch 22 oder 23, **dadurch gekennzeichnet, dass** die planaren Messspulen eine rechteckige Grundform aufweisen, die in einem partiell überdeckten Endbereich aufgeweitet ist (Fig. 5).

26. Induktive Positions- oder Winkelmesseinrichtung nach Anspruch 25, **dadurch gekennzeichnet, dass** die Messspulen in einem Endbereich trapezförmig aufgeweitet sind (Fig. 5).

27. Induktive Positions- oder Winkelmesseinrichtung nach Anspruch 22 oder 23, **dadurch gekennzeichnet, dass** die Messspulen eine dreieckige Grundform aufweisen und mit einer diagonalen Trennung als Differentialspulen ineinander greifen (Fig. 1a).

28. Induktive Positions- oder Winkelmesseinrichtung nach Anspruch 1, **dadurch gekennzeichnet, dass** der zweite Oszillator eine redundante Messspule (2) enthält, d. h. dass die zweite Messspule (2) unter oder über der ersten Messspule (1) in deren Messbereich angeordnet ist.

29. Induktive Positions- oder Winkelmesseinrichtung nach Anspruch 28, **dadurch gekennzeichnet, dass** eine oder mehrere weitere Messspulen (3, 4) in Reihe mit der zweiten Messspule (2) liegen.

30. Induktive Positions- oder Winkelmesseinrichtung nach Anspruch 29, **dadurch gekennzeichnet, dass** die redundanten Messspulen (2, 3, 4) eine segmentierte Wegmessung erlauben (S3, S4, S5 in Fig. 15a; 2, 3, 4 in Fig. 16).

31. Induktive Positions- oder Winkelmesseinrichtung nach Anspruch 30, **dadurch gekennzeichnet, dass** die redundante, segmentierte Spulenanordnung (2, 3, 4 in Fig. 16) die erste Messspule (1) teilweise überlappt.

32. Induktive Positions- oder Winkelmesseinrichtung nach einem der Ansprüche 28 bis 31, **dadurch gekennzeichnet, dass** die redundante, segmentierte Spulenanordnung (2, 3, 4) länger ist als das bewegliche Messelement in Messrichtung.

## Claims

1. Inductive position or angle measurement device having two or more digital oscillators which contain at least one measuring coil (I, II, III, IV), **characterized in that** a first oscillator contains, as a measuring oscillator, a measuring coil (I, II, III, IV) which changes a pulse frequency (f as a function of s; F Mess) of the measuring oscillator on the basis of inductance changes produced by a movable measuring element on the basis of the degree of overlap between the measuring coil and the measuring element, and **in that** a second oscillator contains, as a measuring or reference oscillator, a measuring or reference coil (I, II, III, IV), a reference coil being defined by virtue of the fact that it is either completely covered or completely uncovered by the movable measuring element, with the result that the pulse frequency (f as a function of h; f as a function of T) of the associated reference oscillator (Ref-High; Ref-Low) does not depend on the degree of overlap, and having a digital evaluation circuit in which the pulse frequencies (f; F) are counted and calculated, and, if the second oscillator contains a measuring coil, the two measuring coils are arranged behind one another in the direction of movement of the measuring element in such a manner that the partial overlap of one measuring coil increases when the partial overlap of the other measuring coil decreases, with the result that the pulse frequencies to be evaluated change in opposite directions.

2. Inductive position or angle measurement device according to Claim 1, **characterized in that** the operation of the evaluation circuit is clocked with the aid of a system frequency (F Sys) which is derived from the pulse frequency (F Low) of one of the oscillators.

3. Inductive position or angle measurement device according to Claim 1 or 2, **characterized in that** the pulse frequencies (F Mess, F Ref, F High, F Low) counted in the digital evaluation circuit are calculated in pairs.

4. Inductive position or angle measurement device according to Claims 1 to 3, **characterized by** at least one reference coil (I, II, III, IV).

5. Inductive position or angle measurement device according to Claim 4, **characterized in that** a second oscillator contains, as a low reference oscillator (Ref Low), a reference coil (I, II, III, IV) which is not covered by the movable measuring element, with the result that a pulse frequency (f as a function of T; F Low) of the low reference oscillator (Ref Low) is used to compensate for frequency-influencing parameters, for example ambient temperature (T) and component ageing.

6. Inductive position or angle measurement device according to Claim 4, **characterized in that** a second oscillator contains, as a high reference oscillator (Ref High), a reference coil (I, II, III, IV) which is completely covered by the movable element, with the result that a pulse frequency (f as a function of h; F High) of the high reference oscillator (Ref High) is used to compensate for undesirable changes in the distance (h) between the coils (I, II, III, IV) and the measuring element.

7. Inductive position or angle measurement device according to Claim 4, **characterized in that**
a second oscillator contains, as a low reference oscillator (Ref Low), a reference coil (I, II, III, IV) which is not covered by the movable measuring element, with the result that a pulse frequency (f as a function of T; F Low) of the low reference oscillator (Ref Low) is used to compensate for frequency-influencing parameters, for example ambient temperature (T) and component ageing,
and **in that** a third oscillator contains, as a high reference oscillator (Ref High), a reference coil (I, II, III, IV) which is completely covered by the movable element, with the result that a pulse frequency (f as a function of h; F High) of the high reference oscillator (Ref High) is used to compensate for undesirable changes in the distance (h) between the coils (I, II, III, IV) and the measuring element.

8. Inductive position or angle measurement device according to Claim 1, **characterized in that** the second oscillator and a third oscillator each contain, as high reference oscillators, a reference coil which is completely covered by the movable measuring elements, with the result that the pulse frequencies of the high reference oscillators are used to compensate for undesirable changes in the distance between the coils and the measuring element and to compensate for undesirable tilting of the measuring element in the measuring direction.

9. Inductive position or angle measurement device according to Claim 8, **characterized in that** a fourth oscillator contains, as a high reference oscillator, a reference coil which is completely covered by the movable measuring element, with the result that the pulse frequency of this high reference oscillator is also used to compensate for undesirable changes in the distance between the coils and the measuring element and to compensate for undesirable tilting of the measuring element in any desired direction.

10. Inductive position or angle measurement device according to Claim 1, **characterized in that** two measuring coils are arranged behind one another in the direction of movement of the measuring element in such a manner that the partial overlap of one measuring coil increases when the partial overlap of the other measuring coil decreases, with the result that the pulse frequencies to be evaluated change in opposite directions.

11. Inductive position or angle measurement device according to Claim 9, **characterized in that** the pulse frequencies of a measuring coil and of a reference coil which is not covered are calculated, in particular subtracted, to form a measurement result in which frequency-influencing parameters, for example ambient temperature and component ageing, are compensated for.

12. Inductive position or angle measurement device according to Claim 2, **characterized in that** the system frequency is derived from the pulse frequency of the oscillator having the reference coil which is not covered.

13. Inductive position or angle measurement device according to Claim 7, **characterized in that** the pulse frequencies of the reference coil which is not covered and of the completely covered reference coil are calculated to form a maximum measurement result which is used, as a normalization value, to adapt a measuring time for counting the pulse frequencies of the oscillators.

14. Inductive position or angle measurement device according to Claim 7, **characterized in that** the three coils are arranged in a planar manner on a printed circuit board.

15. Inductive position or angle measurement device according to Claim 7, **characterized in that** at least one of the three coils is mounted, as a discrete component, on the printed circuit board, in particular is soldered in an SMD design.

16. Inductive position or angle measurement device according to Claim 15, **characterized in that** two coils are etched in a planar manner onto the printed circuit board.

17. Inductive position or angle measurement device according to Claim 8, **characterized in that** the planar measuring coil has a rectangular basic form which is widened in a partially covered end region, in particular is widened in a trapezoidal manner.

18. Inductive position or angle measurement device according to one of Claims 1 to 17, **characterized in that**
each digital oscillator comprises, in addition to the measuring or reference coil, two frequency-determining capacitors, a resistor and an inverter.

19. Inductive position or angle measurement device according to Claims 1 to 18, **characterized in that** the pulse frequencies of the digital oscillators are counted in asynchronous counters.

20. Inductive position or angle measurement device according to Claim 2, **characterized in that** the operation of a synchronous part of the evaluation circuit is clocked with the aid of a system frequency which is derived from the pulse frequency of one of the oscillators directly or using a digital divider.

21. Inductive position or angle measurement device according to Claim 9, **characterized in that** a fifth oscillator contains, as a radio-frequency oscillator, a further reference coil which is completely covered by the movable measuring element, with the result that, for the purpose of the compensation, an average distance and tilting can be recorded by means of four distance measurements and can be computationally transposed to the range of the measuring coil.

22. Inductive position or angle measurement device according to one of Claims 7 and 9 and 21, **characterized in that** a further oscillator contains, as a measuring oscillator, a measuring coil, the two measuring coils being arranged behind one another in the direction of movement of the measuring element in such a manner that the partial overlap of one measuring coil increases when the partial overlap of the other measuring coil decreases, with the result that the pulse frequencies to be evaluated change in opposite directions.

23. Inductive position or angle measurement device according to Claim 22, **characterized by** further measuring coils in the direction of movement of the measuring element.

24. Inductive position or angle measurement device having two measuring coils according to one of Claims 23, 24 and 25, **characterized in that** the planar measuring coils have a rectangular basic form (Fig. 1).

25. Inductive position or angle measurement device again according to Claim 22 or 23, **characterized in that** the planar measuring coils have a rectangular basic form which is widened in a partially covered end region (Fig. 5).

26. Inductive position or angle measurement device according to Claim 25, **characterized in that** the measuring coils are widened in a trapezoidal manner in an end region (Fig. 5).

27. Inductive position or angle measurement device according to Claim 22 or 23, **characterized in that** the measuring coils have a triangular basic form and, with a diagonal division, engage in one another as differential coils (Fig. 1a).

28. Inductive position or angle measurement device according to Claim 1, **characterized in that** the second oscillator contains a redundant measuring coil (2), that is to say the second measuring coil (2) is arranged below or above the first measuring coil (1) in the measuring range of the latter.

29. Inductive position or angle measurement device according to Claim 28, **characterized in that** one or more further measuring coils (3, 4) are in series with the second measuring coil (2).

30. Inductive position or angle measurement device according to Claim 29, **characterized in that** the redundant measuring coils (2, 3, 4) allow a segmented displacement measurement (S3, S4, S5 in Fig. 15a; 2, 3, 4 in Fig. 16).

31. Inductive position or angle measurement device according to Claim 30, **characterized in that** the redundant segmented coil arrangement (2, 3, 4 in Fig. 16) partially overlaps the first measuring coil (1).

32. Inductive position or angle measurement device according to one of Claims 28 to 31, **characterized in that** the redundant segmented coil arrangement (2, 3, 4) is longer than the movable measuring element in the measuring direction.

## Revendications

1. Dispositif de mesure de position ou de mesure angulaire inductif avec deux ou plusieurs oscillateurs numériques comprenant au moins une bobine de détection (I, II, III, IV), **caractérisé en ce qu'**un premier oscillateur comprend comme oscillateur de mesure une bobine de détection (I, II, III, IV) qui, en raison de variations d'inductance générées par un élément de mesure mobile en fonction du degré de recouvrement entre la bobine de détection et l'élément de mesure, modifie une fréquence d'impulsion (f fonction de s ; F Mess) de l'oscillateur de mesure, et **en ce qu'**un deuxième oscillateur comprend comme oscillateur de mesure ou de référence une bobine de détection ou de référence (I, II, III, IV), une bobine de référence étant définie **en ce qu'**elle est soit entièrement recouverte soit entièrement non recouverte par l'élément de mesure mobile, de telle sorte que la fréquence d'impulsion (f fonction de h ; f fonction de T) de l'oscillateur de référence associé (Ref-High ; Ref-Low) ne dépende pas du degré de recouvrement, et avec un circuit d'évaluation numérique dans lequel les fréquences d'impulsion (f ; F) sont comptées et calculées, et lorsque le deuxième oscillateur comprend une bobine de détection, les deux bobines de détection sont disposées successivement dans le sens du mouvement de l'élément de mesure de telle sorte que le recouvrement partiel de ladite une bobine de détection augmente lorsque le recouvrement partiel de l'autre bobine de détection diminue de sorte que les fréquences d'impulsion à évaluer varient en sens opposé.

2. Dispositif de mesure de position ou de mesure angulaire inductif selon la revendication 1, **caractérisé en ce que** le fonctionnement du circuit d'évaluation est cadencé à l'aide d'une fréquence système (F Sys) dérivée de la fréquence d'impulsion (F Low) d'un des oscillateurs.

3. Dispositif de mesure de position ou de mesure angulaire inductif selon la revendication 1 ou 2, **caractérisé en ce que** les fréquences d'impulsion (F Mess, F Ref, F High, F Low) comptées dans le circuit d'évaluation numérique sont calculées par paires.

4. Dispositif de mesure de position ou de mesure angulaire inductif selon les revendications 1 à 3, **caractérisé par** au moins une bobine de référence (I, II, III, IV).

5. Dispositif de mesure de position ou de mesure angulaire inductif selon la revendication 4, **caractérisé en ce qu'**un deuxième oscillateur comprend comme oscillateur de référence inférieure (Ref Low) une bobine de référence (I, II, III, IV) non recouverte par l'élément de mesure mobile, de telle sorte qu'une fréquence d'impulsion (f fonction de T ; F Low) de l'oscillateur de référence inférieure (Ref Low) serve à compenser des paramètres affectant la fréquence, comme par exemple la température ambiante (T) et le vieillissement des composants.

6. Dispositif de mesure de position ou de mesure angulaire inductif selon la revendication 4, **caractérisé en ce qu'**un deuxième oscillateur comprend comme oscillateur de référence supérieure (Ref High) une bobine de référence (I, II, III, IV) entièrement recouverte par l'élément mobile, de telle sorte qu'une fréquence d'impulsion (f fonction de h ; F High) de l'oscillateur de référence supérieure (Ref High) serve à compenser des variations indésirables de la hauteur d'espacement (h) des bobines (I, II, III, IV) par rapport à l'élément de mesure.

7. Dispositif de mesure de position ou de mesure angulaire inductif selon la revendication 4, **caractérisé en ce qu'**un deuxième oscillateur comprend comme oscillateur de référence inférieure (Ref Low) une bobine de référence (I, II, III, IV) non recouverte par l'élément de mesure mobile, de telle sorte qu'une fréquence d'impulsion (f fonction de T ; F Low) de l'oscillateur de référence inférieure (Ref Low) serve à compenser des paramètres affectant la fréquence, comme la température ambiante (T) et le vieillissement des composants,
et **en ce qu'**un troisième oscillateur comprend comme oscillateur de référence supérieure (Ref High) une bobine de référence (I, II, III, IV) entièrement recouverte par l'élément mobile, de sorte qu'une fréquence d'impulsion (f fonction de h ; F High) de l'oscillateur de référence supérieure (Ref High) serve à compenser des variations indésirables de la hauteur d'espacement (h) des bobines (I, II, III, IV) par rapport à l'élément de mesure.

8. Dispositif de mesure de position ou de mesure angulaire inductif selon la revendication 1, **caractérisé en ce que** le deuxième oscillateur et un troisième oscillateur comprennent comme oscillateurs de référence supérieure respectivement une bobine de référence entièrement recouverte par les éléments de mesure mobiles, de telle sorte que les fréquences d'impulsion des oscillateurs de référence supérieure servent à compenser des variations indésirables de la hauteur d'espacement des bobines par rapport à l'élément de mesure ainsi qu'à compenser une inclinaison indésirable de l'élément de mesure dans la direction de mesure.

9. Dispositif de mesure de position ou de mesure angulaire inductif selon la revendication 8, **caractérisé en ce qu'**un quatrième oscillateur comprend comme oscillateur de référence supérieure une bobine de référence entièrement recouverte par l'élément de mesure mobile, de telle sorte que la fréquence d'impulsion de cet oscillateur de référence supérieure aussi serve à compenser des variations indésirables de la hauteur d'espacement des bobines par rapport à l'élément de mesure ainsi qu'à compenser une inclinaison indésirable de l'élément de mesure dans une direction quelconque.

10. Dispositif de mesure de position ou de mesure angulaire inductif selon la revendication 1, **caractérisé en ce que** deux bobines de détection sont disposées successivement dans le sens du mouvement de l'élément de mesure de telle sorte que le recouvrement partiel de ladite une bobine de détection augmente lorsque le recouvrement partiel de ladite autre bobine de détection diminue de telle sorte que les fréquences d'impulsions à évaluer varient en sens opposé.

11. Dispositif de mesure de position ou de mesure angulaire inductif selon la revendication 9, **caractérisé en ce que** les fréquences d'impulsion d'une bobine de détection et d'une bobine de référence non recouverte sont calculées, en particulier soustraites, pour former un résultat de mesure dans lequel des paramètres affectant la fréquence, comme par exemple la température ambiante et le vieillissement des composants, sont compensés.

12. Dispositif de mesure de position ou de mesure angulaire inductif selon la revendication 2, **caractérisé en ce que** la fréquence système est dérivée de la fréquence d'impulsion de l'oscillateur avec la bobine de référence non recouverte.

13. Dispositif de mesure de position ou de mesure angulaire inductif selon la revendication 7, **caractérisé en ce que** les fréquences d'impulsion de la bobine de référence non recouverte et de la bobine de référence entièrement recouverte sont calculées pour former un résultat de mesure maximal qui est utilisé comme valeur de normalisation pour ajuster un temps de mesure afin de compter les fréquences d'impulsion des oscillateurs.

14. Dispositif de mesure de position ou de mesure angulaire inductif selon la revendication 7, **caractérisé en ce que** les trois bobines sont disposées de manière planaire sur une carte de circuits imprimés.

15. Dispositif de mesure de position ou de mesure angulaire inductif selon la revendication 7, **caractérisé en ce qu'**au moins l'une des trois bobines est montée comme un composant discret sur la carte de circuits imprimés, en particulier brasée en montage en surface.

16. Dispositif de mesure de position ou de mesure angulaire inductif selon la revendication 15, **caractérisé en ce que** deux bobines sont gravées de manière planaire sur la carte de circuits imprimés.

17. Dispositif de mesure de position ou de mesure angulaire inductif selon la revendication 8, **caractérisé en ce que** la bobine de détection planaire présente une forme de base rectangulaire qui est évasée dans une zone d'extrémité partiellement recouverte, en particulier évasée en forme de trapèze.

18. Dispositif de mesure de position ou de mesure angulaire inductif selon l'une quelconque des revendications 1 à 17, **caractérisé en ce que** chaque oscillateur numérique comprend en plus de la bobine de détection ou de référence deux condensateurs déterminant la fréquence, une résistance et un inverseur.

19. Dispositif de mesure de position ou de mesure angulaire inductif selon les revendications 1 à 18, **caractérisé en ce que** les fréquences d'impulsion des oscillateurs numériques sont comptées dans des compteurs asynchrones.

20. Dispositif de mesure de position ou de mesure angulaire inductif selon la revendication 2, **caractérisé en ce que** le fonctionnement d'une partie synchrone du circuit d'évaluation est cadencé à l'aide d'une fréquence système qui est dérivée directement ou au moyen d'un diviseur numérique à partir de la fréquence d'impulsion d'un des oscillateurs.

21. Dispositif de mesure de position ou de mesure angulaire inductif selon la revendication 9, **caractérisé en ce qu'**un cinquième oscillateur comprend comme oscillateur haute fréquence une autre bobine de référence entièrement recouverte par l'élément de mesure mobile, de sorte que pour la compensation, un espacement moyen et une inclinaison puissent être détectés par quatre mesures d'espacement et transposés mathématiquement sur la plage de la bobine de détection.

22. Dispositif de mesure de position ou de mesure angulaire inductif selon l'une quelconque des revendications 7 ou 9 ou 21, **caractérisé en ce qu'**un oscillateur supplémentaire comprend comme oscillateur de mesure une bobine de détection, dans lequel les deux bobines de détection sont disposées successivement dans le sens du mouvement de l'élément de mesure, de telle sorte que le recouvrement partiel de ladite une bobine de détection augmente lorsque le recouvrement partiel de ladite autre bobine de détection diminue, de sorte que les fréquences d'impulsion à évaluer varient en sens opposé.

23. Dispositif de mesure de position ou de mesure angulaire inductif selon la revendication 22, **caractérisé par** des bobines de détection supplémentaires dans le sens du mouvement de l'élément de mesure.

24. Dispositif de mesure de position ou de mesure angulaire inductif selon l'une quelconque des revendications précédentes 23, 24 ou 25, **caractérisé en ce que** les bobines de détection planaires présentent une forme de base rectangulaire (Fig. 1).

25. Dispositif de mesure de position ou de mesure angulaire inductif encore une fois selon la revendication 22 ou 23, **caractérisé en ce que** les bobines de détection planaires présentent une forme de base rectangulaire qui est évasée dans une zone d'extrémité partiellement recouverte (Fig. 5).

26. Dispositif de mesure de position ou de mesure angulaire inductif selon la revendication 25, **caractérisé en ce que** les bobines de détection sont évasées en forme de trapèze dans une zone d'extrémité (Fig. 5).

27. Dispositif de mesure de position ou de mesure angulaire inductif selon la revendication 22 ou 23, **caractérisé en ce que** les bobines de détection présentent une forme de base triangulaire et s'engagent les unes dans les autres sous forme de bobines différentielles avec une séparation diagonale (Fig. 1a).

28. Dispositif de mesure de position ou de mesure angulaire inductif selon la revendication 1, **caractérisé en ce que** le deuxième oscillateur comprend une bobine de détection redondante (2), c'est-à-dire que la deuxième bobine de détection (2) est disposée au-dessous ou au-dessus de la première bobine de détection (1) dans la zone de mesure de celle-ci.

29. Dispositif de mesure de position ou de mesure angulaire inductif selon la revendication 28, **caractérisé en ce qu'**une ou plusieurs bobines de détection supplémentaires (3, 4) sont placées en série avec la deuxième bobine de détection (2).

30. Dispositif de mesure de position ou de mesure angulaire inductif selon la revendication 29, **caractérisé en ce que** les bobines de détection redondantes (2, 3, 4) permettent une mesure de trajet segmentée (S3, S4, S5 sur la figure 15a ; 2, 3, 4 sur la figure 16).

31. Dispositif de mesure de position ou de mesure angulaire inductif selon la revendication 30, **caractérisé en ce que** l'ensemble de bobines segmenté, redondant (2, 3, 4 sur la figure 16) chevauche partiellement la première bobine de détection (1).

32. Dispositif de mesure de position ou de mesure angulaire inductif selon l'une quelconque des revendications 28 à 31, **caractérisé en ce que** l'ensemble de bobines segmenté, redondant (2, 3, 4) est plus long que l'élément de mesure mobile dans la direction de mesure.
